(19) **Europäisches Patentamt / European Patent Office / Office européen des brevets**

(11) **EP 1 767 965 A1**

(12) # EUROPEAN PATENT APPLICATION
published in accordance with Art. 158(3) EPC

(43) Date of publication:
**28.03.2007 Bulletin 2007/13**

(51) Int Cl.:
**G02B 5/30** (2006.01)

(21) Application number: **05765218.2**

(22) Date of filing: **30.06.2005**

(86) International application number:
**PCT/JP2005/012111**

(87) International publication number:
**WO 2006/004010 (12.01.2006 Gazette 2006/02)**

(84) Designated Contracting States:
**DE FR GB**

(30) Priority: **30.06.2004 JP 2004193737**
**08.09.2004 JP 2004261249**

(71) Applicant: **ZEON CORPORATION**
**Tokyo 100-8246 (JP)**

(72) Inventors:
• **HAYASHI, Masahiko,**
**ZEON CORPORATION**
**Chiyoda-ku, Tokyo 1008323 (JP)**

• **OOISHI, Hitoshi,**
**ZEON CORPORATION**
**Chiyoda-ku, Tokyo 1008323 (JP)**

(74) Representative: **Albrecht, Thomas**
**Kraus & Weisert**
**Patent- und Rechtsanwälte**
**Thomas-Wimmer-Ring 15**
**80539 München (DE)**

(54) **ELECTROMAGNETIC WAVE SHIELDING GRID POLARIZER AND ITS MANUFACTURING METHOD AND GRID POLARIZER MANUFACTURING METHOD**

(57) An electromagnetic wave shielding grid polarizer wherein a fine grating shape (1) consisting of linear, parallel projecting gratings and a grating shape (2) consisting of parallel gratings crossing fine grating shape (1) and having 0.1-500 $\mu$m width and 1 $\mu$m-100 mm pitch are formed; the total length of portions having lengths $10^{-5}$ to $10^{-1}$ times the wavelength of electromagnetic wave is at least 80% out of the projecting gratings of fine grating shape (1) segmented by the gratings of grating shape (2); and fine grating shape (1) is electrically interconnected with grating shape (2) by a conductive reflective material. The grid polarizer is made by a method of transferring linear, parallel grooves of a metal mold or a metal film to a transparent resin shaped article, and vapor-depositing a conductive reflective material on the shaped article, or by a method of formation of a conductive reflective material layer on a transparent base, coating with a resist, exposure to active radiation, development and etching.

FIG. 1

EP 1 767 965 A1

## Description

Technical Field

This invention relates to an electromagnetic wave shielding grid polarizer, and a method of making the same, and a method of making a grid polarizer. More particularly, this invention relates to a grid polarizer having a function of shielding electromagnetic waves adversely influencing electronic parts, and a method of making the grid polarizer having a large area at a reduced cost, and a method of making a grid polarizer having fine gratings with a size of a submicron order and having a large area at a reduced cost by precision working and vapor deposition.

Background Art

In recent years, electromagnetic wave-generating instruments such as a large size television set, a display of a personal computer, and a cell phone have been popularly used. Great attention is attracted for shielding electromagnetic waves. For example, electromagnetic waves generated from a plasma display tend to cause wrong operation of peripheral instruments, and therefore, the plasma display is usually provided with a magnetic wave shielding sheet.

It is said that electromagnetic waves are also generated from a backlight of a liquid crystal display, and give an adverse influence on the image expression. Especially a direct type backlight requiring high luminance generates intensive electromagnetic waves, and therefore, flicker in image expression on the panel occurs unless an electromagnetic wave shielding sheet is provided. Thus, an electromagnetic wave shielding sheet is often provided over the direct type backlight. However, the provision of an electromagnetic wave shielding sheet over the direct type backlight is costly, and tends to cause another problem of taking foreign matter in the backlight system because of complexity of the system.

A proposal has been made in WO01/092006 for a method of making a molding with the surface capable of having high performance such as enhanced electromagnetic wave shielding performance with ease and high reliability, while the production process is simplified and the production cost is reduced. The proposed molding-making method comprises preparing a transferring foil composed of a transparent low-reflective layer, a protective layer and an adhesive layer, superposed in this order on a base film having a releasability; inserting the transferring foil in a mold for injection molding; injecting a molten resin onto the adhesion layer side of the transferring foil, whereby a resin molding is shaped simultaneously with the adhesion of the transferring foil to the surface of resin molding; and then releasing the base film from the resin molding. However, the operation of inserting the transferring foil in the mold for each shot of injection molding is complicated. Further, this method can be adopted for injection molding, but cannot be adopted for a filmy grid polarizer suitable for a liquid crystal display.

Another proposal has been made in Japanese Unexamined Patent Publication (hereinafter abbreviated to "JP-A) 2001-330728 for a method of making a wire grid polarizer from an inexpensive material by a relatively simple process steps. This method of making a wire grid polarizer comprises photo-resist layers are formed on both surfaces of a base plate through which light of a specific wavelength cannot passes; exposing the photo-resist layers on both surfaces to the light by utilizing interference of light to develop a pattern of parallel lines; forming a rugged pattern of parallel lines on both surfaces; and vapor-depositing a metal only on ridges of the pattern of lines or vicinity thereof. However, the wire grid polarizer only with the pattern of parallel lines is not suitable for electromagnetic wave shielding.

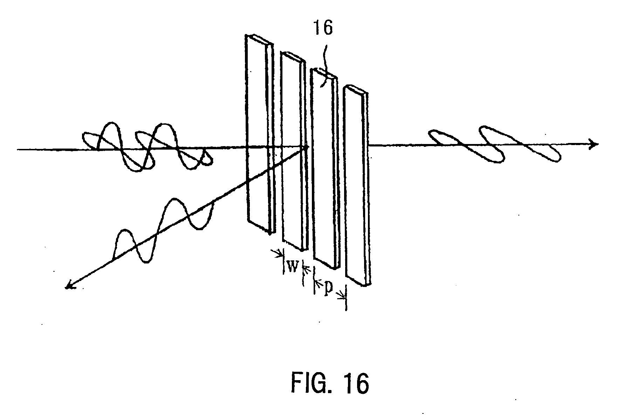

A grid polarizer is a polarizer having fine electrically conductive wires extending parallel to each other with a pitch shorter than the wavelength of the incident light, which form a pattern of crossed stripes. An electric field vector vibrating in direction parallel to an electrically conductive grid is reflected by the grid polarizer, and an electric field vector vibrating in direction perpendicular to an electrically conductive grid is transmitted through the grid polarizer. Fig. 16 is a schematic illustration of a grid polarizer. The polarizing characteristics of a grid polarizer vary depending upon the width (w) of conductive grids 16 and the pitch (p) thereof. The smaller the pitch (p), the better the polarizing characteristics. It is said that the ratio w/p in the range of 0.5 to 0.7 is better. In view of this concept, a process for making a grid polarizer having good polarizing characteristics at a reduced cost is being developed.

For example, a grid polarizer exhibiting enhanced transmittance of infrared rays and improved polarizing characteristics has been proposed in JP-A H2-228608. The proposed grid polarizer is made by a process wherein a base plate exhibiting reduced absorption of the light for measurement is optically polished, an antireflection film is superposed on the polished base plate, and a pattern of parallel lines with a high density of electrically conductive wires is formed on the antireflection film. In this process, a method of stoving double beam interference fringe on a photoresist on the grid base plate by holographic exposure is described.

A process for making a metal grid polarizer element by a planar process as mass-production technique has been proposed in JP-A H7-294730. In this process, a polymethyl methacrylate thin film is exposed to varied electron beam, and developed to form a stripe pattern with a serrated cross-section on a base disk, a metal stamper is made from the stripe pattern, a plurality of replicas are made by using the metal stamper, and oblique vapor deposition is carried out to form a transparent thin protective film.

The above-proposed processes wherein a photoresist or a polymethyl methacryalte this film is exposed and developed, have a problem in that the side faces of the grids formed by development are not smooth, and hence, the optical properties of resulting grid polarizer are not satisfactory. Further, a large-size grid polarizer is difficult to make.

Disclosure of the Invention

Problems to Be Solved by the Invention

An object of the present invention is to provide a grid polarizer having a function of shielding electromagnetic waves adversely influencing electronic parts, and a method of making the grid polarizer having a large area at a reduced cost.
A further object of the present invention is to provide a method of making a grid polarizer having fine gratings with a size of a submicron order and having a large area at a reduced cost by precision working and vapor deposition.

Means for Solving the Problems

The present inventors made extensive researches to solve the above-mentioned problems, and found that the desired electromagnetic wave shielding grid polarizer can be provided by forming on one element a fine grating shape consisting of projecting gratings extending linearly and parallel to each other and having a width of 50 to 600 nm and a pitch of 50 to 1,000 nm, and a second grating shape consisting of gratings extending parallel to each other and having a width of 0.1 to 500 $\mu$m and a pitch of 1 $\mu$m to 100 mm, which cross the projecting gratings constituting the fine grating shape.
The present inventors further found that the desired electromagnetic wave shielding grid polarizer having a fine grating shape with a large area can be made by a process wherein a tool is made from a material having a Mohs hardness of at least 9 by applying high-energy radiation; a fine grating shape consisting of gratings having a size of sub-micron order is formed on a mold member by using the tool; the fine grating shape formed on the mold member is transferred to a shaped article of a transparent resin; and, an electrically conductive reflective material is vapor-deposited on the transparent resin shaped article having transferred thereto the fine grating shape.
The present invention has been completed based on the above-mentioned findings.
Thus, in accordance with the present invention, there are provided the following electromagnetic wave shielding grid polarizers, and processes for making the electromagnetic wave shielding grid polarizers, and processes for making a grid polarizer.

(i). An electromagnetic wave shielding grid polarizer characterized in that:

a fine grating shape (1) consisting of projecting gratings extending linearly and parallel to each other, and at least one group of grating shape (2) consisting of gratings extending parallel and having a width of 0.1 to 500 $\mu$m and a pitch of 1 $\mu$m to 100 mm, which cross the projecting gratings constituting the fine grating shape (1), are formed;
the total length of portions of the projecting gratings constituting the fine grating shape (1) which portions have lengths $10^{-5}$ to $10^{-1}$ times the wavelength of electromagnetic wave to be blocked, is 80% or more out of the total length of the portions of projected gratings constituting the fine grating shape (1) which portions are segmented by the gratings constituting said at least one group of grating shape (2); and
at least part of each projecting grating constituting the fine grating shape (1) and at least part of each grating constituting each group of grating shape (2) are made of electrically conductive reflective material, and said parts of the gratings made of electrically conductive reflective material are electrically interconnected to each other.

(ii). The electromagnetic wave shielding grid polarizer described above in (i), wherein the fine grating shape (1) consists of projecting gratings extending linearly and parallel to each other and having a width of 50 to 600 nm, a pitch of 50 to 1,000 nm, and a height of 50 to 800 nm.
(iii). The electromagnetic wave shielding grid polarizer described above in (i) or (ii), wherein each group of the grating shape (2) consists of gratings extending linearly and parallel to each other.
(iv). The electromagnetic wave shielding grid polarizer described above in (i) or (ii), wherein each group of the grating shape (2) consists of gratings extending parallel in a regular geometrical curve.
(v). The electromagnetic wave shielding grid polarizer described above in any one of (i) to (iv), wherein adjacent two projecting gratings constituting the fine grating shape (1) and adjacent two gratings constituting each group of grating shape (2) form a quadrilateral having a minor diagonal $10^{-5}$ to $10^{-1}$ times the wavelength of electromagnetic wave to be blocked.

(vi). The electromagnetic wave shielding grid polarizer described above in (i) or (ii), wherein the gratings constituting each group of grating shape (2) have a height equal to that of the projecting gratings constituting the fine grating shape (1), and form projected gratins extending parallel to each other.

(vii). The electromagnetic wave shielding grid polarizer described above in (i) or (ii), wherein the projecting gratings constituting the fine grating shape (1) are cut to a base level of the fine grating shape (1) at the intersections between the projecting gratings constituting the fine grating shape (1) and the gratings constituting each group of grating shape (2).

(viii). The electromagnetic wave shielding grid polarizer described above in (i) or (ii), wherein the gratings constituting each group of grating shape (2) have a height higher than that of the projecting gratings constituting the fine grating shape (1), and form projecting gratings extending parallel to each other.

(ix). The electromagnetic wave shielding grid polarizer described above in (i) or (ii), wherein the gratings constituting each group of grating shape (2) have a height lower than that of the projecting gratings constituting the fine grating shape (1), and form projecting gratings extending parallel to each other.

(x). The electromagnetic wave shielding grid polarizer described above in (i) or (ii), wherein the gratings constituting each group of grating shape (2) are cut to a depth lower than the base level of the fine grating shape (1), and form grooves extending parallel to each other.

(xi). The electromagnetic wave shielding grid polarizer described above in (i) or (ii), which exhibits an electromagnetic wave attenuation of at least 20 dB as measured at 500 Hz of electromagnetic waves by a shielding box method.

(xii). An electromagnetic wave shielding grid polarizer characterized in that:

a fine grating shape (1) consisting of projecting gratings having a width of 50 to 600 nm, a pitch of 50 to 1,000 nm and a height of 50 to 800 nm and extending linearly and parallel to each other, and at least one group of grating shape (2) consisting of gratings having a width of 0.1 to 500 $\mu$m and a pitch of 1 $\mu$m to 100 mm and extending linearly and parallel to each other, which cross the projecting gratings constituting the fine grating shape (1), are formed;

adjacent two projecting gratings constituting the fine grating shape (1) and adjacent two gratings constituting each group of grating shape (2) form a quadrilateral having a minor diagonal $10^{-5}$ to $10^{-1}$ times the wavelength of electromagnetic wave to be blocked; and

at least part of each projecting grating constituting the fine grating shape (1) and at least part of each grating constituting each group of grating shape (2) are made of electrically conductive reflective material, and said parts of the gratings made of electrically conductive reflective material are electrically interconnected to each other.

(xiii). A process for making the electromagnetic wave shielding grid polarizer as described above in any one of (i) to (xii), which comprises the steps of:

transferring a grooves shape of a mold or a metal plate, which consist of a group of a plurality of grooves with a depth of 50 to 800 nm extending linearly and parallel to each other, to a shaped article of a transparent resin; and

vapor-depositing an electrically conductive reflective material onto the transparent resin shaped article having the transferred groove shape.

(xiv). The process for making the electromagnetic wave shielding grid polarizer as described above in (xiii), wherein the mold or metal plate having the grooves shape consisting of grooves extending linearly is a metal mold which is made by a method using a tool having linear protrusions at its end with a width of not larger than 600 nm extending linearly and parallel to each other, said tool being made by processing a material having a Mohs hardness of at least 9 by applying high-energy radiation.

(xv). The process for making the electromagnetic wave shielding grid polarizer as described above in (xiii), wherein the mold or metal plate having the grooves shape consisting of grooves extending linearly is a metal mold which is made by a method of coating a mold member with a resist, exposing the resist coating to active radiation, developing the exposed resist, and etching the mold member.

(xvi).The process for making the electromagnetic wave shielding grid polarizer as described above in (xiii), wherein the mold or metal plate having the grooves shape consisting of grooves extending linearly is a metal mold which is made by a method of coating a base with a smooth surface with a resist, exposing the resist coating to active radiation, and then developing the exposed resist to form a group of linear protrusions having a width of 50 to 600 nm, a pitch of 50 to 1,000 nm and a height of 50 to 800 nm and extending linearly and parallel to each other, and transferring the group of linear protrusions to a metal mold.

(xvii). A process for making the electromagnetic wave shielding grid polarizer as described above in any one of (i) to (xii), which comprises the steps of:

forming a layer of an electrically conductive reflective material having a thickness of 50 to 800 nm on a transparent base,
coating the layer of electrically conductive reflective material formed on the transparent base layer, with a resist,
exposing the resist coating to active radiation,
developing the exposed resist, and
etching the layer of electrically conductive reflective material.

(xviii). A process for making a grid polarizer characterized in that:

(A) a material having a Mohs hardness of at least 9 is processed by applying high-energy radiation to make a tool having linear protrusions at its end with a width of not larger than 600 nm;
(B) a fine grating shape consisting of gratings having a width of 50 to 600 nm, a pitch of 50 to 1,000 nm and a height of 50 to 800 nm is formed on a mold member by using the tool;
(C) the fine grating shape formed on the mold member is transferred to a shaped article of a transparent resin; and
(D) an electrically conductive reflective material is vapor-deposited on the transparent resin shaped article having transferred thereto the fine grating shape.

(xix). A process for making a grid polarizer
characterized in that:

(A) a material having a Mohs hardness of at least 9 is processed by applying high-energy radiation to make a tool having linear protrusions at its end with a width of not larger than 600 nm;
(B) a fine grating shape consisting of gratings having a width of 50 to 600 nm, a pitch of 50 to 1,000 nm and a height of 50 to 800 nm is formed on a mold member by using the tool;
(C) the fine grating shape formed on the mold member is transferred to a metal plate;
(D) the fine grating shape transferred to the metal plate is transferred to a shaped article of a transparent resin; and
(E) an electrically conductive reflective material is vapor-deposited on the transparent resin shaped article having transferred thereto the fine grating shape.

(xx). The process for making the grid polarizer as described above in (xviii) or (xix), wherein the tool made from the material having a Mohs hardness of at least 9 has a plurality of the protrusions.

(xxi). The process for making the grid polarizer as described above in any one of (xviii) to (xx), wherein the fine grating shape is formed on the mold member using a precision fine working machine having a precision of not larger than 100 nm in the movable X, Y and Z axes, and a tool having a working surface with an arithmetic mean surface roughness (Ra) of not larger than 10 nm, in a thermostatic vibration-controlled chamber where the temperature is controlled within $\pm$ 0.5°C and the displacement at a vibration of at least 0.5 Hz is controlled to a value not larger than 50 $\mu$m.

Effect of the Invention

The electromagnetic wave shielding grid polarizer according to the present invention has a polarizing function combined with a magnetic wave shielding function, and therefore, a liquid crystal display capable of suppressing electromagnetic radiation can be realized with a reduced thickness. The electromagnetic wave shielding grid polarizer can be provided in other optical elements, and a liquid crystal display can be made at a low cost. An electromagnetic wave shielding grid polarizer with a large area can be made in a low cost by the making process according to the present invention.

Further, by the process for making a grid polarizer according to the present invention, a grid polarizer having fine gratings with s size of sub-micron order and having a large area can be made in a low cost by adopting precision fine work and vapor deposition.

Brief Description of the Drawings

Fig. 1 is a partial perspective illustration of one embodiment of the electromagnetic wave shielding grid polarizer according to the present invention.

Fig. 2 is a partial perspective illustration of another embodiment of the electromagnetic wave shielding grid polarizer according to the present invention.

Fig. 3 is a partial perspective illustration of a still another embodiment of the electromagnetic wave shielding grid polarizer according to the present invention.

Fig. 4 is a partial perspective illustration of a further embodiment of the electromagnetic wave shielding grid polarizer according to the present invention.

Fig. 5 is a partial perspective illustration of a further embodiment of the electromagnetic wave shielding grid polarizer according to the present invention.

Fig. 6 is a partial perspective illustration of a further embodiment of the electromagnetic wave shielding grid polarizer according to the present invention.

Fig. 7 is an enlarged detailed view illustrating gratings in a further embodiment of the electromagnetic wave shielding grid polarizer according to the present invention.

Fig. 8 is an enlarged detailed view illustrating gratings in a further embodiment of the electromagnetic wave shielding grid polarizer according to the present invention.

Fig. 9 is a view illustrating a method of manufacturing a cutting tool used for making an electromagnetic wave shielding grid polarizer or a grid polarizer.

Fig. 10 is a perspective view illustrating a method of fabricating a mold member used for making an electromagnetic wave shielding grid polarizer or a grid polarizer.

Fig. 11 is an enlarged detailed cross-sectional view illustrating a fine grating shape formed on a mold member.

Fig. 12 is an enlarged detailed cross-sectional view illustrating another fine grating shape formed on a mold member.

Fig. 13 is an enlarged detailed cross-sectional view illustrating still another fine grating shape formed on a mold member.

Fig. 14 is a view illustrating a method of oblique vapor deposition of an electrically conductive reflective material in the process for making the electromagnetic wave shielding grid polarizer.

Fig. 15 is a view illustrating another method of oblique vapor deposition of an electrically conductive reflective material in the process for making the electromagnetic wave shielding grid polarizer.

Fig. 16 is a schematic illustration of the electromagnetic wave shielding grid polarizer.

Explanation of Reference Numerals

| | |
|---|---|
| 1 | Fine grating shape |
| 2 | Second grating shape |
| 3 | Fine grating shape |
| 4 | Second grating shape |
| 5 | Third grating shape |
| 6 | Sinusoidal curve |
| 7 | Material |
| 8 | High energy rays |
| 9 | Linear groove |
| 10 | Cutting tool |
| 11 | Mold member |
| 12 | Steel material for mold |
| 13 | Metallic layer |
| 14 | Transparent resin shaped article |
| 15 | Source for vapor deposition |
| 16 | Electrically conductive grid |

Best Mode for Carrying Out the Invention

Electromagnetic Wave Shielding Grid Polarizer

A first embodiment of the electromagnetic wave shielding grid polarizer according to the present invention, is characterized in that:

a fine grating shape (1) consisting of projecting gratings extending linearly and parallel to each other, and at least one group of grating shape (2) consisting of gratings extending parallel to each other and having a width of 0.1 to

500 $\mu$m and a pitch of 1 $\mu$m to 100 mm, which cross the projecting gratings constituting the fine grating shape (1), are formed;

the total length of portions of the projecting gratings constituting the fine grating shape (1) which portions have lengths $10^{-5}$ to $10^{-1}$ times the wavelength of electromagnetic wave to be blocked, is 80% or more out of the total length of the portions of projecting gratings constituting the fine grating shape (1) which portions are segmented by the gratings constituting said at least one group of grating shape (2); and

at least part of each projecting grating constituting the fine grating shape (1) and at least part of each grating constituting each group of grating shape (2) are made of electrically conductive reflective material, and said parts of the gratings made of electrically conductive reflective material are electrically interconnected to each other.

In the electromagnetic wave shielding grid polarizer of the present invention, the term "grating shape" refers to a group of plural gratings extending linearly and parallel to each other with a constant pitch, or a group of plural gratings extending in a regular geometric curve parallel to each other. The term "pitch" as used herein means a distance between the center line of a linearly extending grating and the center line of an adjacent linearly extending grating. The term "extending parallel to each other" as used herein means that a plurality of straight lines or geometric curves extend in parallel relationship without intersection to each other.

The grating shape (2) may be either composed of one group of gratings, or two or more groups of gratings. Preferably the grating shape (2) is composed of one group of gratings. Each group of the grating shape (2) may either consist of gratings extending in a straight line and parallel to each other, or consist of gratings extending parallel to each other in a regular geometrical curve.

In the electromagnetic wave shielding grid polarizer, s-polarized light of visible light is transmitted through the part of the projecting gratings constituting the fine grating shape (1) made of electrically conductive reflective material, but, p-polarized light of visible light and p-polarized wave of electromagnetic radiation reflect from said part of the projecting gratings. s-polarized light of visible light is shielded by the part of the gratings constituting each group of grating shape (2) made of electrically conductive reflective material.

The electromagnetic wave refers to radiation having a wavelength in the range of 10 $\mu$m to $10^6$ m, and the visible light refers to radiation having a wavelength in the range of 360 nm to 800 nm. The electromagnetic wave shielding grid polarizer according to the present invention is especially effective for shielding electromagnetic radiation with a wavelength in the range of 10 $\mu$m to $10^6$ m, which are emitted from various optical displays and often cause wrong operation of electronic instruments.

The electromagnetic wave shielding grid polarizer according to the present invention exhibits an electromagnetic wave attenuation of at least 20 dB, preferably at least 30 dB and more preferably at least 35 dB, as measured on electromagnetic radiation at 500 MHz by a shielding box method. When the electromagnetic wave attenuation is smaller than 20 dB, the electromagnetic wave shielding performance is liable to be insufficient.

The phase "at least part of each projecting grating constituting the fine grating shape (1) is made of electrically conductive reflective material" refers to that a part or the entirety of the cross-section perpendicular to the length direction of each projecting grating is constituted by electrically conductive reflective material. The electrically conductive reflective material may cover each of the gratings, or may constitute the entirety of each of the gratings.

The phase "at least part of each grating constituting each group of grating shape (2) is made of electrically conductive reflective material" refers to that, in the case when the gratings are projecting gratings, a part or the entirety of the cross-section perpendicular to the length direction of each projecting grating is constituted by electrically conductive reflective material. In the case when the gratings have a height equal to the base level of the projecting gratings constituting the fine grating shape (1), the above-mentioned phrase refers to that linearly extending stripes or layers of electrically conductive reflective material are formed at the same level as the base level of the projecting gratings constituting the fine grating shape (1). In the case when the gratings are cut to a depth lower than the base level of the fine grating shape (1) to form grooves extending parallel to each other, the above-mentioned phrase refers to that linearly extending stripes or layers of electrically conductive reflective material are formed on the bottom and/or the inner side of linearly extending grooves.

The projecting gratings constituting the fine grating shape (1) of the electromagnetic wave shielding grid polarizer preferably have a width of 50 to 600 nm, a pitch of 50 to 1,000 nm, and a height of 50 to 800 nm. When the width, the pitch or the height is below 50 nm, the projecting gratings are generally difficult to fabricate or work. When the width, the pitch or the height is larger than 600 nm, 1,000 nm or 800 nm, respectively, the p-polarized light of visible light tends to be undesirably transmitted, leading to deterioration of the polarizing characteristics.

The gratings constituting at least one group of grating shape (2) have a width of 0.1 to 500 $\mu$m and a pitch of 1 $\mu$m to 100 mm and extend linearly and parallel to each other. When the width is smaller than 0.1 $\mu$m or the pitch is smaller than 1 $\mu$m, the s-polarized light of visible light is undesirably reflected, leading to deterioration of the polarizing characteristics. When the width is larger than 500 $\mu$m or the pitch is larger than 100 mm, the electromagnetic wave shielding performance is reduced and the gratings tend to be erroneously recognized on the display.

In the electromagnetic wave shielding grid polarizer, the total length of portions of the projecting gratings constituting the fine grating shape (1) which portions have lengths $10^{-5}$ to $10^{-1}$ times the wavelength of electromagnetic wave to be blocked, is 80% or more out of the total length of the portions of projecting gratings constituting the fine grating shape (1) which portions are segmented by the gratings constituting said at least one group of grating shape (2).

If the total length of portions of the projecting gratings constituting the fine grating shape (1) which portions have lengths $10^{-5}$ to $10^{-1}$ times the wavelength of electromagnetic wave to be blocked, is smaller than 80% out of the total length of the portions of projecting gratings constituting the fine grating shape (1) which portions are segmented by the gratings constituting said at least one group of grating shape (2), the polarizing characteristics or the electromagnetic wave shielding performance is liable to be deteriorated.

In the electromagnetic wave shielding grid polarizer, adjacent two projecting gratings constituting the fine grating shape (1) and adjacent two gratings constituting each group of grating shape (2) form a quadrilateral preferably having a minor diagonal $10^{-5}$ to $10^{-1}$ times the wavelength of electromagnetic wave to be blocked.

By the phrase "adjacent two projecting gratings constituting the fine grating shape (1) and adjacent two gratings constituting each group of grating shape (2) form a quadrilateral having a minor diagonal ..." as used herein, we mean that the center lines of adjacent two projecting gratings constituting the fine grating shape (1) and the center lines of adjacent two gratings constituting each group of grating shape (2) form a quadrilateral having a minor diagonal of the specified length.

When the projecting gratings constituting the fine grating shape (1) extend in a straight line and the gratings constituting each group of the grating shape (2) extend in a straight line, the quadrilateral is a parallelogram. It is to be noted that the parallelogram does not refer to a parallelogram formed from two sides of each grating and from adjacent two gratings intersecting said sides of each grating. When the linearly extending projecting gratings constituting the fine grating shape (1) and the linearly extending gratings constituting each group of the grating shape (2) are crossed perpendicularly with each other, the quadrilateral is rectangular and the term "minor diagonal of the quadrilateral" refers to each diagonal of the rectangle.

In the electromagnetic wave shielding grid polarizer, if the quadrilateral formed by adjacent two projecting gratings constituting the fine grating shape (1) and adjacent two gratings constituting each group of grating shape (2) has a minor diagonal of smaller than $10^{-5}$ times the wavelength of electromagnetic wave to be blocked, s-polarized light of visible light is reflected and thus the polarizing characteristics tend to be deteriorated. If said quadrilateral has a minor diagonal of larger than $10^{-1}$ times the wavelength of electromagnetic wave to be blocked, s-polarized light of visible light is transmitted and thus the electromagnetic wave shielding performance tends to be reduced.

In the electromagnetic wave shielding grid polarizer according to the present invention, the gratings constituting the grating shape (2) preferably have a height in the range of -500 to 500 $\mu$m from the base surface. If the gratings constituting the grating shape (2) have a height lower than -500 $\mu$m, namely, form grooves having a depth of larger than -500 $\mu$m, or the gratings constituting the grating shape (2) have a height higher than 500 $\mu$m, the grating shape (2) is liable to be difficult to form. By the term "base surface" as used herein we mean a surface which is contiguous with the foot of the linearly extending projecting gratings constituting the fine gating shape (1).

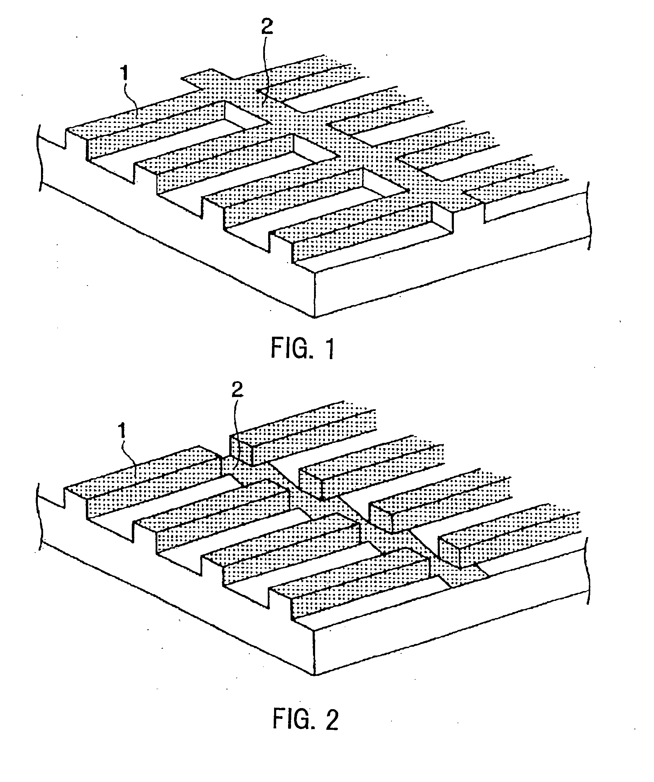

Typical embodiments of the electromagnetic wave shielding grid polarizer according to the present invention are illustrated in Fig. 1 to Fig. 6. In these figures, a corner portion of the electromagnetic wave shielding grid polarizer is illustrated where four projecting gratings constituting the fine grating shape (1) and one grating constituting the grating shape (2) are shown for convenience. The area on which an electrically conductive reflective material has been vapor-deposited is shaded.

In the embodiment shown in Fig. 1, grating 2 constituting the grating shape (2) has the same height as those of projecting gratings 1 constituting the fine grating shape (1).

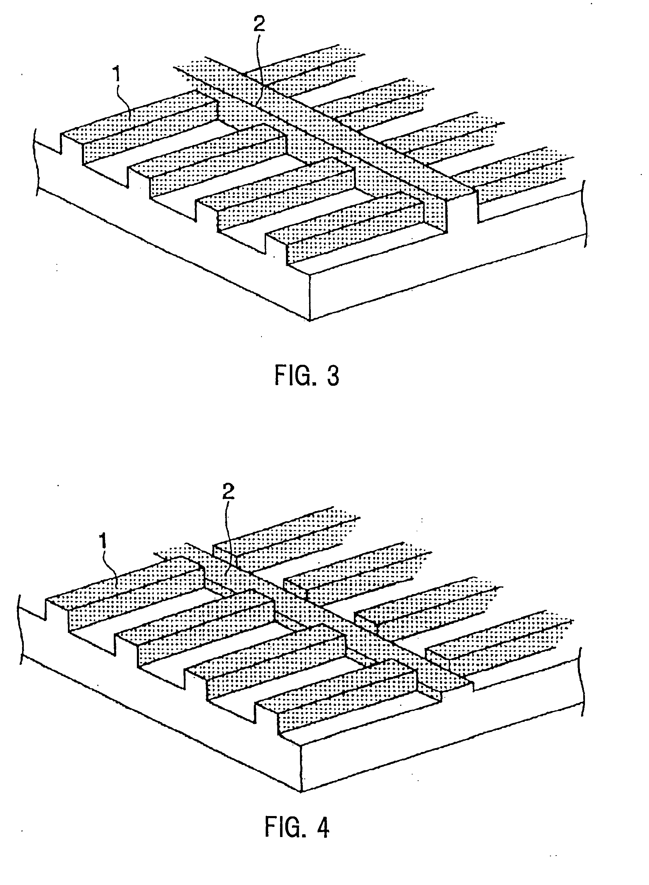

In the embodiment shown in Fig. 2, grating 2 constituting the grating shape (2) extends in a straight line and has a height of 0, that is, grating 2 has been formed on the same level as that of the base surface of the fine grating shape (1), and projecting gratings 1 constituting the fine grating shape (1) are cut at the intersecting area with grating 2 to a depth of the same level as that of the base surface.

In the embodiment shown in Fig. 3, grating 2 constituting the grating shape (2) has a height higher than that of projecting gratings 1 constituting the fine grating shape (1). Gating 2 constituting the grating shape (2) continuously extends in a straight line, and projecting gratings 1 constituting the fine grating shape (1) are intermittent at intersecting points with grating 2.

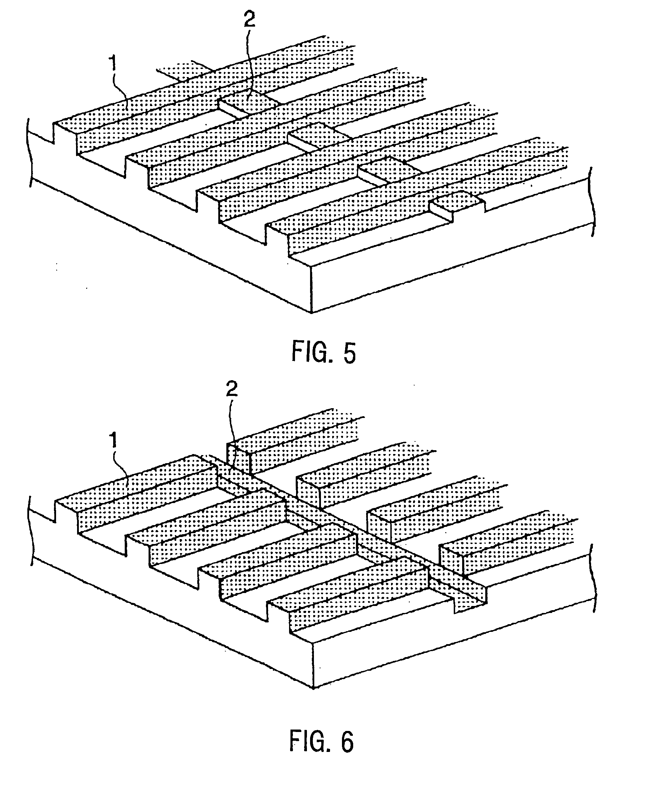

In the embodiment shown in Fig. 4, grating 2 constituting the grating shape (2) has a height lower than that of projecting gratings 1 constituting the fine grating shape (1). Gating 2 constituting the grating shape (2) continuously extends in a straight line, and projecting gratings 1 constituting the fine grating shape (1) are intermittent at intersecting points with grating 2.

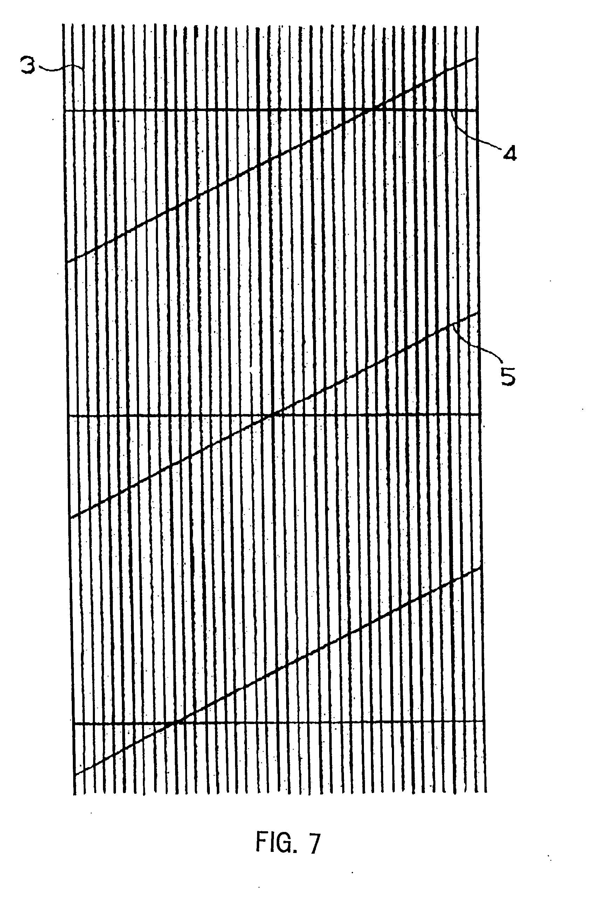

In the embodiment shown in Fig. 5, grating 2 constituting the grating shape (2) forms a linearly extending projecting grating having a height lower than that of projecting gratings 1. Projecting gratings 1 constituting the fine grating shape (1) continuously extend in a straight line, and grating 2 constituting the grating shape (2) is interrupted at intersecting points with projecting gratings 1.

In the embodiment shown in Fig. 6, grating 2 constituting the grating shape (2) has a height of minus, that is, forms a groove having a depth lower than the base surface. The grating 2, i.e. , the groove continuously linearly extends, and projecting gratings 1 are interrupted at intersecting points with grating 2.

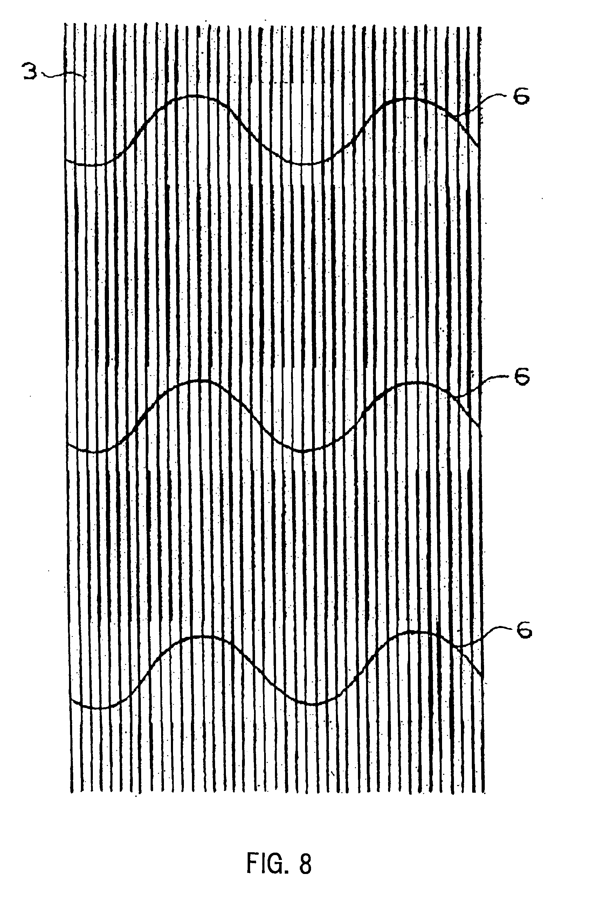

Fig. 7 is schematic illustration of an example of a first embodiment of the electromagnetic wave shielding grid polarizer according to the present invention. In this example of the electromagnetic wave shielding grid polarizer, projecting gratings 3 constituting the fine grating shape (1) perpendicularly intersect gratings 4 constituting a group of the grating shape (2), and the projecting gratings 3 constituting the fine grating shape (1) further intersect gratings 5 constituting another group of the grating shape (2) at an angle of 60 degrees. By this embodiment wherein projecting gratings 3 intersect gratings constituting a plurality of groups of the grating shape (2), the electromagnetic wave shielding effect can more enhanced.

Fig. 8 is schematic illustration of another example of the first embodiment of the electromagnetic wave shielding grid polarizer according to the present invention. In this example of the electromagnetic wave shielding grid polarizer, projecting gratings 3 constituting the fine grating shape (1) intersect gratings 6 extending in a sine wave curve and constituting a group of the grating shape (2), wherein the sine wave curve has regularly repeated cycles at a constant pitch at a phase angle of 180 degrees. By this embodiment wherein projecting gratings 3 intersect gratings 6 extending in a sine wave curve having regularly repeated cycles, the electromagnetic wave shielding effect can be manifested.

A second embodiment of the electromagnetic wave shielding grid polarizer according to the present invention, is characterized in that:

a fine grating shape (1) consisting of projecting gratings having a width of 50 to 600 nm, a pitch of 50 to 1,000 nm and a height of 50 to 800 nm and extending linearly and parallel to each other, and at least one group of grating shape (2) consisting of gratings having a width of 0.1 to 500 $\mu$m and a pitch of 1 $\mu$m to 100 mm and extending linearly and parallel to each other, which cross the projecting gratings constituting the fine grating shape (1), are formed;

adjacent two projecting gratings constituting the fine grating shape (1) and adjacent two gratings constituting each group of grating shape (2) form a quadrilateral having a minor diagonal $10^{-5}$ to $10^{-1}$ times the wavelength of electromagnetic wave to be blocked; and

at least part of each projecting grating constituting the fine grating shape (1) and at least part of each grating constituting each group of grating shape (2) are made of electrically conductive reflective material, and said parts of the gratings made of electrically conductive reflective material are electrically interconnected to each other.

In the second embodiment of the electromagnetic wave shielding grid polarizer, if the projecting gratings constituting the fine grating shape (1) have a width, a pitch and a height, at least one of which is smaller than 50 nm, or have a width of larger than 600 nm, a pitch of larger than 1,000 nm or a height larger than 800 nm, problems tend to arise which are similar to those which are mentioned as to the first embodiment of the grid polarizer. If the gratings constituting the grating shape (2) have a width smaller than 0.1 $\mu$m, or a pitch smaller than 1.0 $\mu$m, s-polarized light of visible light is undesirably reflected, and thus the polarizing characteristics are often deteriorated. If gratings constituting the grating shape (2) extend in a geometric curve and have a width larger than 500 $\mu$ m or a pitch larger than 100 nm, the electromagnetic wave shielding performance is reduced and the gratings tend to be erroneously recognized on the display.

If adjacent two projecting gratings constituting the fine grating shape (1) and adjacent two gratings constituting each group of grating shape (2) form a quadrilateral having a minor diagonal outside the range of $10^{-5}$ to $10^{-1}$ times the wavelength of electromagnetic wave to be blocked, then, problems tend to arise which are similar to those which are mentioned as to the first embodiment of the grid polarizer.

In the second embodiment of the electromagnetic wave shielding grid polarizer, other characteristics thereof are preferably chosen according to criteria similar to those which are mentioned as to the first embodiment of the grid polarizer.

Process for Making Electromagnetic Wave Shielding Grid Polarizer

The electromagnetic wave shielding grid polarizer of the present invention can be produced by the following two processes.

First Making Process

A process for making the electromagnetic wave shielding grid polarizer comprising the steps of:

transferring a grooves shape of a mold or a metal plate, which consist of a group of a plurality of grooves with a depth of 50 to 800 nm extending linearly and parallel to each other, to a shaped article of a transparent resin; and vapor-depositing an electrically conductive reflective material onto the transparent resin shaped article having the transferred groove shape.

Second Making Process

A process for making the electromagnetic wave shielding grid polarizer comprising the steps of:

forming a layer of an electrically conductive reflective material having a thickness of 50 to 800 nm on a transparent base,
coating the layer of electrically conductive reflective material formed on the transparent base layer, with a resist,
exposing the resist coating to active radiation,
developing the exposed resist, and
etching the layer of electrically conductive reflective material.

In the first making process, the mold having the grooves shape consisting of linear grooves extending linearly is made (1) by a method using a tool having protrusions at its end with a width of not larger than 600 nm extending linearly and parallel to each other, said tool being made by processing a material having a Mohs hardness of at least 9 by applying high-energy radiation; or (2) by a method of coating a mold member with a resist, the resist coating is exposed to active radiation, developing the exposed resist, and etching the mold member.

In the first making process, the tool having protrusions at its end with a width of not larger than 600 nm, which is used for making a mold member having the grooves shape consisting of grooves extending linearly, is made from a material having a Mohs hardness of at least 9 by processing the material by applying high-energy radiation.

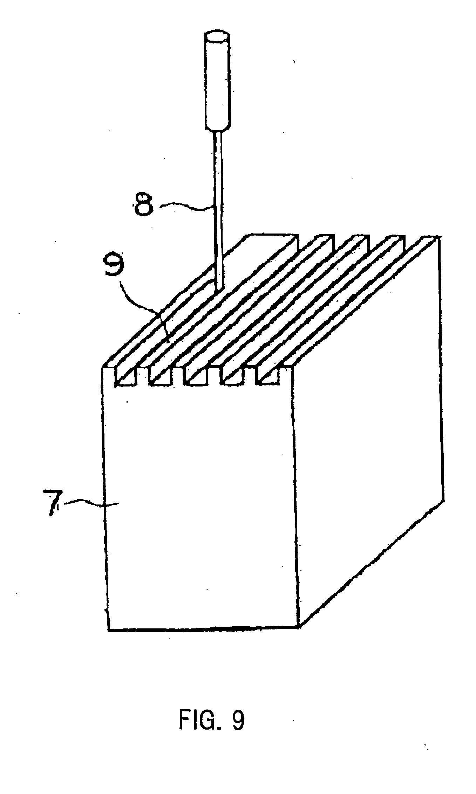

Fig. 9 is a view illustrating a method of manufacturing the tool. In Fig. 9, a material 7 having a Mohs hardness of at least 9 is processed with high-energy radiation 8 to form on its end face linear grooves with a width not larger than 600 nm.

The material having a Mohs hardness of at least 9 includes, for example, diamond, cubic boron nitride and corundum. These materials may be used as a single crystal or a sintered body. Preferably these materials are used as a single crystal in view of high processing precision and long tool life. Especially single crystal diamond, sintered diamond body and cubic boron nitride are preferable because of high hardness. Single crystal diamond is most preferable. The sintered body includes, for example, metal bonds using as a sintering agent cobalt, steel, tungsten, nickel or bronze; and vitrified bonds using as a sintering agent feldspar, soluble clay, refractory clay or frit. Diamond metal bond is especially preferable.

High-energy radiation used for making the above-mentioned includes, for example, laser beam, ion beam and electron beam. Of these, ion beam and electron beam are preferable. Ion beam is especially preferable because high processing rate can be adopted. A preferable processing method using ion beam is an ion beam-applying chemical processing wherein a material to be processed is irradiated with ion beam while active gas such as Freon or chlorine is blown against the material. The ion beam-applying chemical processing is advantageous because the rate of etching can be enhanced, undesirable vapor deposition of sputtered material can be avoided, and a super fine processing with a high precision of submicron order can be conducted at a high efficiency.

The tool made by the above-mentioned method has linear protrusions at its end with a width of not larger than 600 nm and more preferably not larger than 300 nm. The width of linear protrusions is measured on the tip portion of the cross-section perpendicular to the direction of processing. When the width of linear protrusions is larger than 600 nm, the pitch of the grid polarizer is undesirable large, and the polarizing characteristics of the grid polarizer are deteriorated. The cross-section perpendicular to the direction of processing preferably also has a width of not larger than 600 nm in the vicinity of the bottom thereof.

The cross-sectional shape of the protrusions is not particularly limited, and the cross-section perpendicular to the direction of processing may have a rectangular, triangular, semicircular, trapezoidal shape, or somewhat modified shape of these shapes. Of these, a rectangular cross-sectional shape is preferable because, when an electrically conductive reflective material is vapor-deposited on a transparent resin shaped article to which the rectangular cross-sectional shape has been transferred, a non-vapor-deposited area can easily be allowed to remain. A triangular cross-sectional shape is also preferable because a non-vapor-deposited area can easily be allowed to remain if the direction of vapor deposition is appropriately chosen.

No limitation is imposed to the number of linear protrusions to be formed on one end of the tool. The number of linear protrusions may be either one or plural, but is preferably at least 5, more preferably at least 10 and especially preferably at least 20. By forming a plurality of linear protrusions on the tool, a plurality of gratings can be formed on a mold member by one operation for fabrication, and the fabrication can be carried out with a high efficiency. The number of undesirable irregular fabrication occurring at adjacent areas can be minimized.

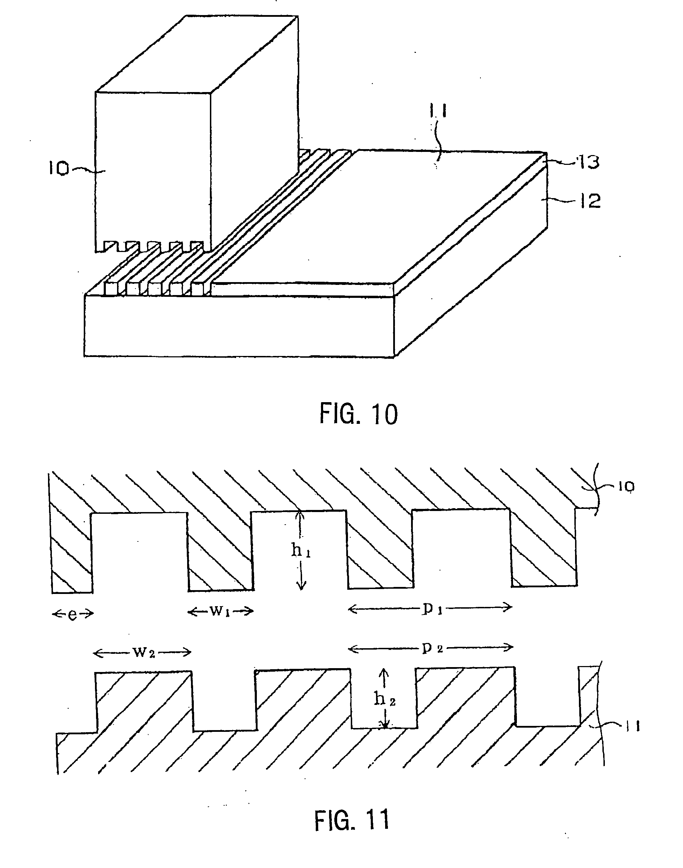

Fig. 10 is a perspective view illustrating a method of fabricating a mold member used for the making process according to the present invention. Using a tool having fine linear protrusions at its end, a fine grating shape consisting of gratings extending linearly and parallel to each other and having a width of 50 to 600 nm, a pitch of 50 to 1,000 nm and a height of 50 to 800 nm is formed on a mold member. The formation of the fine grating shape can be carried out while a mold member 11 is shifted with respect to the tool 10 provided in a precision fine working machine (not shown in Fig. 10). More specifically, fine gratings are formed between confronting two sides of the mold member 11, and the tool 10 is shifted in the transverse direction and adjacent grating shape is formed. This fabrication operation is repeated to form the fine gratings over the entire working surface of the mold member 11. Alternatively, the formation of fine gratings can be carried out while the tool is shifted with respect to the fixed mold member.

The fabrication of the mold member 11 can be carried out by either grinding or cutting. Cutting is preferable because the fine shape of the tool 10 can be transferred with high precision. The entirety or a tip portion of each fine linear protrusion formed on the tool 10 forms a groove on the mold member 11. Thus the entirety of each groove or a portion apart from the bottom of each groove form a linear protrusion on the mold member 11.

The formation of fine gratings will be explained more in detail.

In the grating shape consisting of fine gratings with a rectangular cross-section as illustrated in Fig. 11, the following formulae are substantially satisfied.

$$w_2 = p_1 - w_1, \quad p_2 = p_1, \quad \text{and} \quad h_2 \leqq h_1$$

wherein $w_1$, $p_1$ and $h_1$ are width, pitch and height, respectively, of fine linear protrusions of the tool, and $w_2$, $p_2$ and $h_2$ are width, pitch and height, respectively, of fine gratings formed on the mold member.

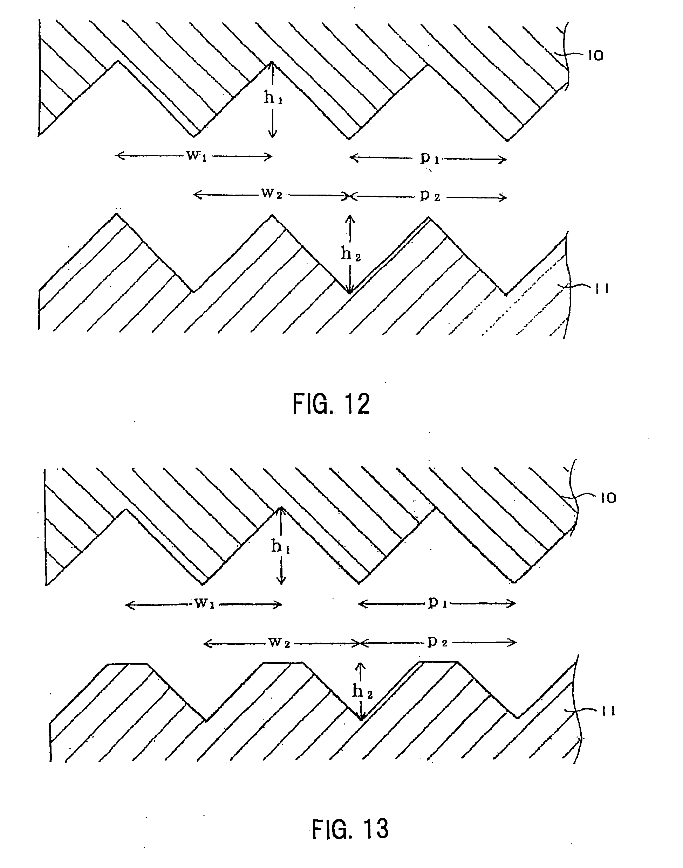

In the grating shape consisting of fine gratings with a triangular cross-section as illustrated in Fig. 12 and Fig. 13, the following formulae are substantially satisfied.

$$w_2 = w_1 = p_2 = p_1, \quad \text{and} \quad h_2 \leqq h_1$$

wherein $w_1$, $p_1$ and $h_1$ are width, pitch and height, respectively, of linear protrusions as measured in the vicinity of the linear protrusion of the tool, and $w_2$, $p_2$ and $h_2$ are width, pitch and height, respectively, of fine gratings formed on the mold member.

In consideration of the above-recited formulae, the shape of the tool for forming the fine grating shape on the mold member can be determined.

Each of the fine linear protrusions located at both sides of the tool preferably has a width "e" (Fig. 11) satisfying the following equations.

$$w_1 - 25 < e < w_1 + 25 \ (\text{nm}) \quad \text{or} \quad e = 0$$

If $0 < e < w_1$- 25 (nm) or $e > w_1$ + 25 (nm) are satisfied, it is often difficult to form fine gratings having pitches with high precision at seams between repeated cycle of fabrication.

The mold member preferably comprises a base steel material 12 for mold member, and a metal layer 13 having a hardness suitable for forming fine grating shape, which is formed on the base steel material by electrodeposition or electroless plating (Fig. 10).

The steel material is selected from those which do not have pin holes, streak fissures and segregation cracks, and it includes, for example, pre-hardened steel made by vacuum dissolution or vacuum casting, precipitation-hardened steel, stainless steel and copper. The metal layer formed by electrodeposition or electroless plating preferably has a Vickers hardness in the range of 40 to 350, preferably 200 to 300. The metal having a Vickers hardness of 40 to 350 includes, for example, copper, nickel, nickel-phosphorus alloy and palladium. The metal having a Vickers hardness of 200 to 300 includes, for example, copper, nickel and nickel-phosphorus alloy.

The tool used for forming the fine grating shape on the mold member preferably has a working surface having an arithmetic mean surface roughness (Ra) not larger than 10 nm, more preferably not larger than 3 nm. When the arithmetic mean surface roughness exceeds 10 nm, fine gratings having a width of 50 to 600 nm, a pitch of 50 to 1,000 nm and a depth of 50 to 800 nm are often difficult to form with high precision. The arithmetic mean surface roughness (Ra) can be measured according to JIS B0601.

The formation of the fine grating shape on the mold member is preferably carried out by using a precision fine working machine. The working machine preferably has a precision of not larger than 100 nm, more preferably not larger than 50 nm, in the movable X, Y and Z axes. When the precision in the movable X, Y and Z axes of the precision fine working machine is larger than 100 nm, the pitch and depth are liable to be apart from the designated values, and the characteristics of the electromagnetic wave shielding grid polarizer tend to be deteriorated.

The formation of the fine grating shape on the mold member is preferably carried out in a thermostatic chamber where the temperature is controlled within the range of ± 0.5°C, more preferably within the range of ± 0.3°C, and especially preferably within the range of ± 0.2°C. If the temperature control in the thermostatic chamber is out of the range of ± 0.5°C, the fine grating shape is difficult to form with high precision because of thermal expansion of the tool and the mold member.

The formation of the fine grating shape on the mold member is preferably carried out in a vibration-controlled chamber where the displacement at a vibration of at least 0.5 Hz is controlled to a value not larger than 50 $\mu$m, more preferably not larger than 10 $\mu$m. If the displacement at a vibration of at least 0.5 Hz is larger than 50 $\mu$m, the fine grating shape is often difficult to form with high precision because of large vibration.

The method of forming the second grating shape (2) on the mold member, which crosses the fine grating shape (1) formed in the above-mentioned manner is not particularly limited, and cutting working can be adopted using, for example, a diamond bite, a cubic boron nitride bite or a hard metal alloy bite.

The order in which the fine grating shape (1) and the grating shape (2) are formed on the mold member is not particularly limited. The procedure by which the fine grating shape (1) is first formed and then the grating shape (2) is formed, or the procedure by which the grating shape (2) is first formed and then the fine grating shape (1) can be adopted.

No limitation is imposed to the depth of grating shape (2) with respect to the depth of fine grating shape (1) which are formed on the mold member . For example, the depths of the grating shapes (1) and (2) may be either the same as each other or different from each other. By using the mold member having the fine grating shape (1) with the same depth as that of the grating shape (2), an electromagnetic wave shielding polarizer having the grating shape (2) extending linearly with the same height as that of the fine grating shape (1), as illustrated in Fig. 1, can be obtained. By using the mold member having the grating shape (2) with a depth larger than that of the fine grating shape (1), an electromagnetic wave shielding polarizer having the grating shape (2) extending linearly with a height larger than that of the fine grating shape (1), as illustrated in Fig. 3, can be obtained. By using the mold member having the grating shape (2) with a depth smaller than that of the fine grating shape (1), an electromagnetic wave shielding polarizer having the grating shape (2) extending linearly with a height smaller than that of the fine grating shape (1), as illustrated in Fig. 5, can be obtained.

The mold member as used in the present invention includes, for example, a mold for injection molding, a mold for compression molding and a roll for film-shaping. Especially, a roll capable of continuously shaping film at a reduced cost is preferable.

As a modification of the production process according to the present invention, a process can be adopted wherein a metal plate is formed on the mold member having the fine grating shape (1), the metal plate having the thus-transferred fine grating shape (1) is peeled from the mold member, and then the fine grating shape (1) is transferred to a transparent resin shaped article. This process is advantageous because the mold member having the fine grating shape (1) can be repeatedly used many times.

The metal plate is preferably made by electroforming. The material used for electroforming preferably has a Vickers hardness in the range of 40 to 550 Hv, more preferably 150 to 450 Hv. The electroforming material having a Vickers hardness of 40 to 550 Hv includes copper, nickel, nickel-phosphorus alloy, palladium, nickel-iron alloy and nickel-cobalt alloy. The electroforming material having a Vickers hardness of 150 to 450 Hv includes copper, nickel, nickel-phosphorus alloy and palladium, nickel-iron alloy.

In the first production process according to the present invention, a group of grooves extending in a straight line with a depth of 50 to 800 nm, formed on the mold member, are transferred to a transparent resin shaped article. The method of transferring the shape of grooves to the transparent resin shaped article is not particularly limited. For example, there can be adopted a method wherein a cylindrical mold member having the shape of grooves is pressed on the transparent resin shaped article, and then exposed to light; a method wherein the mold member having the shape of grooves is inserted into a mold for injection molding, and then a transparent resin is injection molded; a method wherein the mold member having the shape of grooves is inserted into a mold for compression molding, and then a transparent resin is compression molded; and a method wherein a transparent resin is cast by using the mold member having the shape of grooves.

The transparent resin used preferably has an in-plane retardation Re of not larger than 50 nm, more preferably not larger than 10 nm, at a wavelength of 550 nm. When the in-plane retardation Re of transparent resin is larger than 50 nm, the polarized state of the linear polarized light transmitted or reflected tends to be varied by retardation. The in-plane retardation Re can be determined according to the formula: Re = |nx-ny|* d where nx and ny are refractive indexes as measured in two directions perpendicular to each other in a plane, d is thickness of transparent resin shaped article, and * refers to product.

The transparent resin constituting the transparent resin shaped article is not particularly limited, and, as specific examples thereof, there can be mentioned a methacrylate resin, polycarbonate, polystyrene, an acrylonitrile-styrene copolymer, a methyl methacrylate-styrene copolymer, polyether-sulfone and polyethylene terephthlate. The transparent resin shaped article preferably has a moisture absorption of not larger than 0.3% by weight, more preferably not larger than 0.1% by weight. When the moisture absorption of the transparent resin shaped article is larger than 0.3% by weight, the fine grating shape is difficult to form with high precision because of dimensional change occurring due to absorption of moisture.

An ultraviolet rays-curable resin is suitable as the transparent resin because the transfer of the fine grating shape can be effected easily and with high precision. A shaped article of a resin having an alicyclic structure is also suitable as the transparent resin shaped article. The alicyclic structure-having resin exhibits good fluidity in a molten state, and the transfer of the fine grating shape can be effected with high precision by injection molding. The alicyclic structure-having resin exhibits a low moisture absorption and therefore it has good dimensional stability. The alicyclic structure-having resin includes resins having an cycloalkane structure in the main backbone and/or side chains thereof.

As specific examples of the alicyclic structure-having resin, there can be mentioned a ring-opened polymer or a ring-opened copolymer of a norbornene monomer, and hydrogenation products thereof; an addition polymer or an addition copolymer of a norbornene monomer, and hydrogenation products thereof; a polymer of a cycloolefin monomer having a single ring, and a hydrogenation product thereof; a polymer of a cyclic conjugated diene monomer, and hydrogenation product thereof; a polymer or a copolymer of a vinyl alicyclic hydrocarbon monomer, and hydrogenation product thereof; a hydrogenation product prepared by hydrogenating the unsaturated bonds in the aromatic ring of a polymer or a copolymer of a vinyl aromatic hydrocarbon monomer. Of these, a hydrogenation product of a polymer of a norbornene monomer, and a hydrogenation product prepared by hydrogenating the unsaturated bonds in the aromatic ring of a polymer of a vinyl aromatic hydrocarbon monomer are especially preferable because of high mechanical strength and high heat resistance.

In the first making process according to the present invention, an electrically conductive reflective material is vapor-deposited on the transparent resin shaped article having transferred thereto the fine grating shape (1) and the grating shape (2). The electrically conductive reflective material preferably exhibits a refractive index of at least 0.04, but lower than 4.0, more preferably at least 0.04, but lower than 3.0, and an extinction coefficient of at least 0.70, more preferably at least 1.0, at a temperature of 25°C and a wavelength of 550 nm. Such electrically conductive reflective material includes, for example, silver and aluminum. If the electrically conductive reflective material exhibits a refractive index of smaller than 0.04 or at least 4.0, or an extinction coefficient of smaller than 0.70 at a temperature of 25°C and a wavelength of 550 nm, the electrically conductive reflective material tends to have poor surface reflectivity.

When the electrically conductive reflective material is vapor-deposited on the transparent resin shaped article having transferred thereto the fine grating shape (1) and the grating shape (2) in the making process according to the present invention, oblique vapor deposition is carried out to give a structure through which s-polarized light is transmitted with a non-vapor-deposited portion of the electrically conductive reflective material remaining on the fine grating shape.

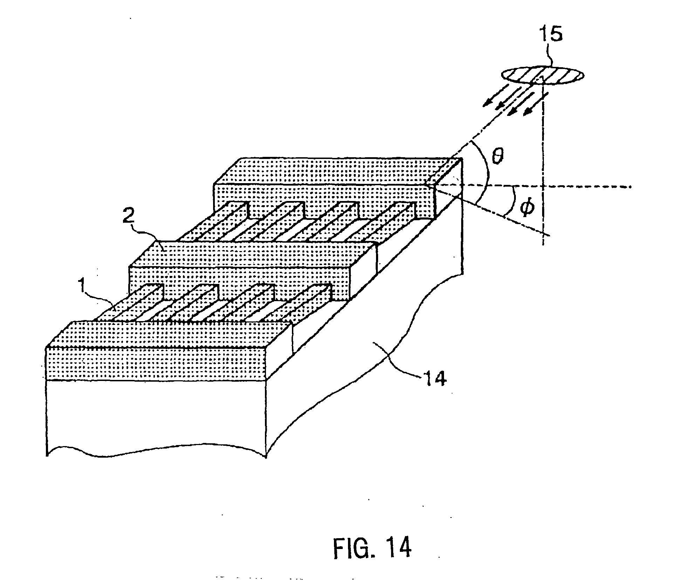

Fig. 14 is a view illustrating one embodiment of oblique vapor deposition of an electrically conductive reflective material. In this embodiment, a transparent resin shaped article 14 having gratings 1 constituting the fine grating shape (1) and gratings 2 constituting the grating shape (2) is inclined so that the plane defined by the gratings 1 and gratings 2 is inclined with an inclination angle of θ to the vapor deposition source 15 and the grating shape (2) is inclined with an inclination angle of φ to the vapor deposition source 15. By conducting the vapor deposition under conditions such that the plane defined by the gratings 1 and gratings 2, and the grating shape (2) are inclined with stated inclination angles, the electrically conductive material can be vapor-deposited on the desired area so that the electrically conductive material covering the fine grating shape (1) is interconnected with the electrically conductive material covering the grating shape (2).

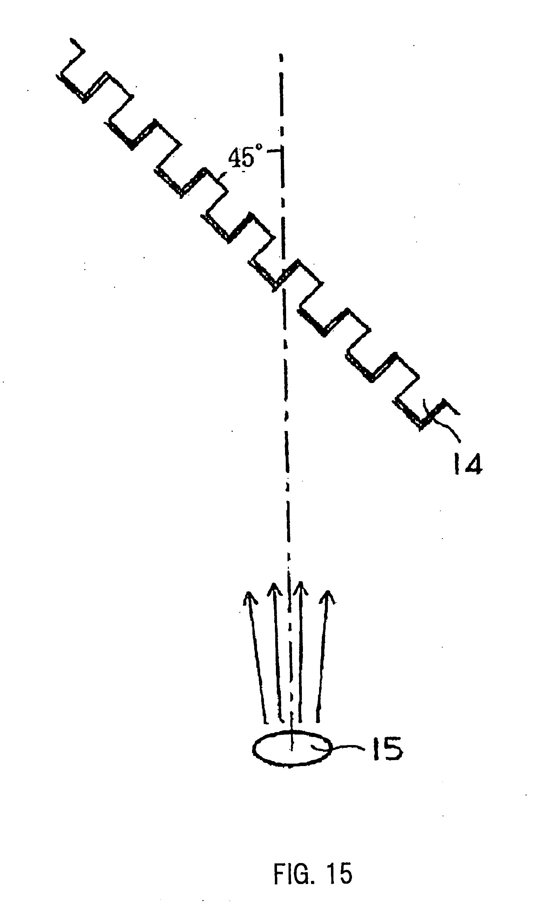

Fig. 15 is a view illustrating another embodiment of oblique vapor deposition of an electrically conductive reflective material. In this embodiment, a transparent resin shaped article 14 having transferred thereto the fine grating shape (1) consisting of projecting gratings extending in a straight line and having a square cross-section perpendicular to the length direction is inclined with an inclination angle of 45 degrees to the vapor deposition source 15. The vapor deposition of the electrically conductive reflective material is carried out under such conditions to give an electromagnetic wave shielding grid polarizer having a configuration such that the upper surface of each projecting grating and one side of each projecting grating are vapor-deposited as illustrated by double lines in Fig. 15, and the bottom surface of each projecting grating and the other side thereof remain non-vapor-deposited. If desired, the vapor deposition is further carried out under conditions such that the transparent resin shaped article is inclined in the direction opposite to that shown in Fig. 15 with an inclination angle of 45 degrees to the vapor deposition source 15, whereby the other side of each projecting grating is also be vapor-deposited, and only the bottom surface of each projecting grating remains non-vapor-deposited.

The inclination angle θ of the transparent resin shaped article to the vapor-deposition source is not particularly limited, but is preferably in the range of 10 to 90 degrees. The cross-sectional shape of each projecting grating extending in a straight line constituting the fine grating shape (1), and the inclination angle θ of the transparent resin shaped article to the vapor deposition source are appropriately chosen depending upon the wavelength of light applied to the electromagnetic wave shielding grid polarizer. Whereby the area of the fine grating shape of the transparent resin shaped article to which the vapor deposition is effected can be controlled. By suitably choosing the cross-sectional shape of each projecting grating constituting the fine grating shape (1) and the cross-sectional shape of each grating constituting the grating shape (2), or choosing the inclination angle to the vapor deposition source, the vapor-deposited surface on the fine grating shape (1) and the vapor-deposited surface on the grating shape (2) can be interconnected to each other, and thus the desired electromagnetic wave shielding characteristics can be manifested.

A metal mold having at least a group of grooves extending in a straight line used in the first making process for the electromagnetic wave shielding grid polarizer according to the present invention is made by a method (second method) wherein a metal mold is coated with a resist, the resist coating is exposed to active radiation, the exposed resist is developed, and the mold member is etched.

The mold member used in the second method for making the mold is selected from those which do not have pin holes, streak fissures and segregation cracks, and it includes, for example, pre-hardened steel made by vacuum dissolution or vacuum casting, and precipitation-hardened steel.

As specific examples of the resist to be coated on the mold member, there can be mentioned electron radiation positive resists such as polymethyl methacrylate (PMMA) and ZEP 520; electron radiation negative resists such as calix-arene, SAL601, NEB-22 and ZEN4200; a novolak-naphthoquinone positive resist; and chemically amplifying resists. The active radiation for irradiation of resist includes, for example, light of short wavelength such as g rays, i rays, KrF excimer laser and ArF excimer laser, and electron beams.

In the second method of making the mold, in the case when the fine grating shape (1) and the grating shape (2) having different depths from each other are formed on a mold member, it is preferable that the fine grating shape (1) is first formed on the mold member by a process of coating with a resist, exposure of the resist to active radiation, development and etching, and then the grating shape (2) is formed on the mold member by a process of coating with a resist, exposure of the resist to active radiation, development and etching. Alternatively, a reverse order may be adopted, namely, it is also possible to first form the grating shape (2) and then form the fine grating shape (1).

In the second method of making the mold, the transfer of the grating shape from the mold to a transparent resin shaped article and the vapor deposition of an electrically conductive reflective material to the transparent resin shaped article having transferred thereto the grating shape may also be carried out in the same manner as mentioned above.

The metal plate having a group of grooves extending in a straight line used in the first making process for the electromagnetic wave shielding grid polarizer according to the present invention is made by a method wherein a base with a smooth surface is coated with a resist, the resist coating is exposed to active radiation, the exposed resist is developed to form a group of linear protrusions having a width of 50 to 600 nm, a pitch of 50 to 1,000 nm and a height of 50 to 800 nm and extending in a straight line and parallel to each other, and transferring the group of linear protrusions to a metal plate. The linear grooves shape of the metal plate is transferred to a transparent resin shaped article, and an electrically conductive reflective material is vapor-deposited on the transparent resin shaped article having the grating shape.

The base with smooth surface used for the production of the metal plate includes, for example, glass, silicon wafer, stainless steel, chromium and a resin shaped article. As specific examples of the resist to be coated on the smooth surface of the base, there can be mentioned electron radiation positive resists such as polymethyl methacrylate (PMMA) and ZEP 520; electron radiation negative resists such as calix-arene, SAL601, NEB-22 and ZEN4200; a novolak-naphthoquinone positive resist; and chemically amplifying resists. The active radiation for irradiation of resist includes, for example, light of short wavelength such as g rays, i rays, KrF excimer laser and ArF excimer laser, and electron beams.

In the above-mentioned method, in the case when the fine grating shape (1) and the grating shape (2) have different heights from each other, it is preferable that the fine grating shape (1) is first formed on the base by a process of coating with a resist, exposure of the resist to active radiation, development and etching, and then the grating shape (2) is formed on the base by a process of coating with a resist, exposure of the resist to active radiation, development and etching. Alternatively, a reverse order may be adopted, namely, it is also possible to first form the grating shape (2) and then form the fine grating shape (1).

In the above-mentioned method, the transfer of the grating shape on the base with smooth surface to the metal plate is preferably carried out by electroforming. The material used for electroforming preferably has a Vickers hardness in the range of 40 to 550 Hv, more preferably 150 to 450 Hv. The electroforming material having a Vickers hardness of 40 to 550 Hv includes copper, nickel, nickel-phosphorus alloy, palladium, nickel-iron alloy and nickel-cobalt alloy. The transfer of the grating shape from the metal plate to a transparent resin shaped article and the vapor deposition of an electrically conductive reflective material to the transparent resin shaped article having transferred thereto the grating shape may also be carried out in the same manner as mentioned above.

The second process for making the electromagnetic wave shielding grid polarizer according to the present invention comprises the steps of:

forming a layer of an electrically conductive reflective material having a thickness of 50 to 800 nm on a transparent base,

coating the layer of electrically conductive reflective material formed on the transparent base layer, with a resist,

exposing the resist coating to active radiation,

developing the exposed resist, and

etching the layer of electrically conductive reflective material.

The transparent base used in the second making process includes not only those which are transparent to visible light, but also those which are transparent, for example, to infrared rays (which can be used depending upon the use of the electromagnetic wave shielding grid polarizer). As specific examples of the transparent base, there can be mentioned a transparent resin shaped article, glass, calcium fluoride, bariumfluoride, zinc selenide, thallium bromoiodide (KRS-5) and thallium bromochloride (KRS-6). The layer of an electrically conductive reflective material formed on the transparent base includes, for example, films of aluminum, silver, copper and chromium. The resist to be coated on the electrically conductive reflective material layer includes, for example, electron radiation positive resists such as polymethyl methacrylate (PMMA) and ZEP 520; electron radiation negative resists such as calix-arene, SAL601, NEB-22 and ZEN4200; a novolak-naphthoquinone positive resist; and chemically amplifying resists. The active radiation for irradiation of resist includes, for example, light of short wavelength such as g rays, i rays, KrF excimer laser and ArF excimer laser, and electron beams.

Process for Manufacturing Grid Polarizer

A first embodiment of the process for making a grid polarizer according to the present invention is characterized in that:

(A) a material having a Mohs hardness of at least 9 is processed by applying high-energy radiation to make a tool having linear protrusions at its end with a width of not larger than 600 nm;

(B) a fine grating shape consisting of gratings having a width of 50 to 600 nm, a pitch of 50 to 1,000 nm and a height of 50 to 800 nm is formed on a mold member by using the tool;

(C) the fine grating shape formed on the mold member is transferred to a shaped article of a transparent resin; and

(D) an electrically conductive reflective material is vapor-deposited on the transparent resin shaped article having transferred thereto the fine grating shape.

A second embodiment of the process for making a grid polarizer according to the present invention is characterized in that:

(A) a material having a Mohs hardness of at least 9 is processed by applying high-energy radiation to make a tool having linear protrusions at its end with a width of not larger than 600 nm;

(B) a fine grating shape consisting of gratings having a width of 50 to 600 nm, a pitch of 50 to 1,000 nm and a height of 50 to 800 nm is formed on a mold member by using the tool;

(C) the fine grating shape formed on the mold member is transferred to a metal plate;

(D) the fine grating shape transferred to the metal plate is transferred to a shaped article of a transparent resin; and

(E) an electrically conductive reflective material is vapor-deposited on the transparent resin shaped article having transferred thereto the fine grating shape.

Fig. 9 is a view illustrating a method of manufacturing a tool used for making a grid polarizer according to the present invention. A material 7 having a Mohs hardness of at least 9 is processed by applying high energy radiation 8 to cut an end surface of the material to form grooves 9 extending in a straight line with a width of not larger than 600 nm. In the embodiment illustrated in Fig. 9, a plurality of grooves 9 extend in a straight line and parallel to each other.

The material having a Mohs hardness of at least 9 used in the making process of the present invention includes, for example, diamond, cubic boron nitride and corundum. These materials may be used as a single crystal or a sintered body. Preferably these materials are used as a single crystal in view of high processing precision and long tool life. Especially single crystal diamond, sintered diamond body and cubic boron nitride are preferable because of high hardness. Single crystal diamond is most preferable. The sintered body includes, for example, metal bonds using as a sintering agent cobalt, steel, tungsten, nickel or bronze; and vitrified bonds using as a sintering agent feldspar, soluble clay, refractory clay or frit. Diamond metal bond is especially preferable.

High-energy radiation used for making a grid polarizer according to the present invention includes, for example, laser beam, ion beam and electron beam. Of these, ion beam and electron beam are preferable. Ion beam is especially preferable because high processing rate can be adopted. A preferable processing method using ion beam is an ion beam-applying chemical processing wherein a material to be processed is irradiated with ion beam while active gas such as Freon or chlorine is blown against the material. The ion beam-applying chemical processing is advantageous because the rate of etching can be enhanced, undesirable vapor deposition of sputtered material can be avoided, and a super fine processing with a high precision of submicron order can be conducted at a high efficiency.

The tool made by the above-mentioned method has linear protrusions at its end with a width of not larger than 600 nm and more preferably not larger than 300 nm. The width of linear protrusions is measured on the tip portion of the cross-section perpendicular to the direction of processing. When the width of linear protrusions is larger than 600 nm, the pitch of the grid polarizer is undesirable large, and the polarizing characteristics of the grid polarizer are deteriorated. The cross-section perpendicular to the direction of processing preferably also has a width of not larger than 600 nm in the vicinity of the bottom thereof.

In the process for making a grid polarizer according to the present invention, the cross-sectional shape of the protrusions is not particularly limited, and the cross-section perpendicular to the direction of processing may have a rectangular, triangular, semicircular, trapezoidal shape, or somewhat modified shape of these shapes. Of these, a rectangular cross-sectional shape is preferable because, when an electrically conductive reflective material is vapor-deposited on a transparent resin shaped article to which the rectangular cross-sectional shape has been transferred, a non-vapor-deposited area can easily be allowed to remain. A triangular cross-sectional shape is also preferable because a non-vapor-deposited area can easily be allowed to remain if the direction of vapor deposition is appropriately chosen.

No limitation is imposed to the number of linear protrusions to be formed on one end of the tool. The number of linear protrusions may be either one or plural, but is preferably at least 5, more preferably at least 10 and especially preferably at least 20. By forming a plurality of linear protrusions on the tool, a plurality of gratings can be formed on a mold member by one operation for fabrication, and the fabrication can be carried out with a high efficiency. The number of undesirable irregular fabrication occurring at adjacent areas can be minimized.

Fig. 10 is a perspective view illustrating a method of fabricating a mold member used for the making process according to the present invention. Using a tool having fine linear protrusions at its end, a fine grating shape consisting of gratings extending linearly and parallel to each other and having a width of 50 to 600 nm, a pitch of 50 to 1,000 nm and a height of 50 to 800 nm is formed on a mold member. When the width, pitch and height of the linear protrusions of the tool are below 50 nm, the formation of gratings on a mold member is often difficult. When the width of the linear protrusions of the tool exceeds 600 nm, or the pitch thereof exceeds 1,000 nm, the polarizing characteristics of the grid polarizer are liable to be deteriorated. When the height of the linear protrusions of the tool exceeds 800 nm, the transfer of the fine gratings of the mold member to a transparent resin shaped article is often difficult.

In the process for making a grid polarizer according to the present invention, the fabrication of the mold member can be carried out by either grinding or cutting. Cutting is preferable because the fine shape of the tool can be transferred with high precision. The entirety or a tip portion of each fine linear protrusion formed on the tool forms a groove on the mold member. Thus the entirety of each groove or a portion apart from the bottom of each groove form a linear protrusion on the mold member.

In the grating shape consisting of fine gratings with a rectangular cross-section as illustrated in Fig. 11, the following formulae are substantially satisfied.

$$w_2 = p_1 - w_1, \quad p_2 = p_1, \quad \text{and} \quad h_2 \leqq h_1$$

wherein $w_1$, $p_1$ and $h_1$ are width, pitch and height, respectively, of fine linear protrusions of the tool, and $w_2$, $p_2$ and $h_2$ are width, pitch and height, respectively, of fine gratings formed on the mold member.

In the grating shape consisting of fine gratings with a triangular cross-section as illustrated in Fig. 12 and Fig. 13, the following formulae are substantially satisfied.

$$w_2 = w_1 = p_2 = p_1, \quad \text{and} \quad h_2 \leqq h_1$$

wherein $w_1$, $p_1$ and $h_1$ are width, pitch and height, respectively, of linear protrusions as measured in the vicinity of the linear protrusion of the tool, and $w_2$, $p_2$ and $h_2$ are width, pitch and height, respectively, of fine gratings formed on the mold member.

In consideration of the above-recited formulae, the shape of the tool for forming the fine grating shape on the mold member can be determined.

In the process for making a grid polarizer according to the present invention, each of the fine linear protrusions located at both sides of the tool preferably has a width "e" (Fig. 11) satisfying the following equations.

$$w_1 - 25 < e < w_1 + 25 \text{ (nm)} \text{ or } e = 0$$

If $0 < e < w_1 - 25$ (nm) or $e > w_1 + 25$ (nm) are satisfied, it is often difficult to form fine gratings having pitches with high precision at seams between repeated cycle of fabrication.

As illustrated in Fig. 10, the formation of the fine grating shape can be carried out while a mold member 11 is shifted with respect to the tool 10 provided in a precision fine working machine (not shown in Fig. 10). More specifically, fine gratings are formed between confronting two sides of the mold member 11, and the tool 10 is shifted in the transverse direction and adjacent grating shape is formed. This fabrication operation is repeated to form the fine gratings over the entire working surface of the mold member 11. Alternatively, the formation of fine gratings can be carried out while the tool is shifted with respect to the fixed mold member.

The mold member used in the making process according to the present invention preferably comprises a base steel material 12 for mold member, and a metal layer 13 having a hardness suitable for forming fine grating shape, which is formed on the base steel material by electrodeposition or electroless plating (Fig. 10).

The steel material for mold member is selected from those which do not have pin holes, streak fissures and segregation cracks, and it includes, for example, pre-hardened steel made by vacuum dissolution or vacuum casting, precipitation-hardened steel, stainless steel and copper. The metal layer formed by electrodeposition or electroless plating preferably has a Vickers hardness in the range of 40 to 350, preferably 200 to 300. The metal having a Vickers hardness of 40 to 350 includes, for example, copper, nickel, nickel-phosphorus alloy and palladium. The metal having a Vickers hardness of 200 to 300 includes, for example, copper, nickel and nickel-phosphorus alloy.

The tool used for forming the fine grating shape on the mold member preferably has a working surface having an arithmetic mean surface roughness (Ra) not larger than 10 nm, more preferably not larger than 3 nm. When the arithmetic mean surface roughness exceeds 10 nm, fine gratings having a width of 50 to 600 nm, a pitch of 50 to 1,000 nm and a depth of 50 to 800 nm are often difficult to form with high precision. The arithmetic mean surface roughness (Ra) can be measured according to JIS B0601.

In the process for making a grid polarizer according to the present invention, the formation of the fine grating shape on the mold member is preferably carried out by using a precision fine working machine. The working machine preferably has a precision of not larger than 100 nm, more preferably not larger than 50 nm, in the movable X, Y and Z axes. When the precision in the movable X, Y and Z axes of the precision fine working machine is larger than 100 nm, the pitch and depth are liable to be apart from the designated values, and the characteristics of the electromagnetic wave shielding grid polarizer tend to be deteriorated.

The formation of the fine grating shape on the mold member is preferably carried out in a thermostatic chamber where the temperature is controlled within the range of $\pm$ 0.5°C, more preferably within the range of $\pm$ 0.3°C, and especially preferably within the range of $\pm$ 0.2°C. If the temperature control in the thermostatic chamber is out of the range of $\pm$ 0.5°C, the fine grating shape is difficult to form with high precision because of thermal expansion of the tool and the mold member.

The formation of the fine grating shape on the mold member is preferably carried out in a vibration-controlled chamber where the displacement at a vibration of at least 0.5 Hz is controlled to a value not larger than 50 $\mu$m, more preferably not larger than 10 $\mu$m. If the displacement at a vibration of at least 0.5 Hz is larger than 50 $\mu$m, the fine grating shape is often difficult to form with high precision because of large vibration.

The mold member as used in the present invention includes, for example, a mold for injection molding, a mold for compression molding and a roll for film-shaping. Especially, a roll capable of continuously shaping film at a reduced cost is preferable.

As a modification of the making process according to the present invention, a process can be adopted wherein a metal plate is formed on the mold member having the fine grating shape (1), the metal plate having the thus-transferred fine grating shape (1) is peeled from the mold member, and then the fine grating shape (1) is transferred to a transparent resin shaped article. This process is advantageous because the mold member having the fine grating shape (1) can be repeatedly used many times.

The metal plate is preferably made by electroforming. The material used for electroforming preferably has a Vickers hardness in the range of 40 to 550 Hv, more preferably 150 to 450 Hv. The electroforming material having a Vickers hardness of 40 to 550 Hv includes copper, nickel, nickel-phosphorus alloy, nickel-iron alloy, nickel-cobalt alloy and palladium, The electroforming material having a Vickers hardness of 150 to 450 Hv includes copper, nickel, nickel-phosphorus alloy, nickel-iron alloy and palladium,

In the making process according to the present invention, fine grating shape consisting of gratings having a width of 50 to 600 nm, a pitch of 50 to 1,000 nm and a height of 50 t 800 nm, formed on the mold member, is transferred to a transparent resin shaped article. The method of transferring the fine grating shape to the transparent resin shaped article is not particularly limited. For example, there can be adopted a method wherein a cylindrical mold member having the fine grating shape is pressed on the transparent resin shaped article, and then exposed to light; a method wherein the mold member having the fine grating shape is inserted into a mold for injection molding, and then a transparent resin is injection molded; a method wherein the mold member having the fine grating shape is inserted into a mold for compression molding, and then a transparent resin is compression molded; and a method wherein a transparent resin is cast by using the mold member having the fine grating shape.

The transparent resin used preferably has an in-plane retardation Re of not larger than 50 nm, more preferably not larger than 10 nm, at a wavelength of 550 nm. When the in-plane retardation Re of transparent resin is larger than 50 nm, the polarized state of the linear polarized light transmitted or reflected tends to be varied by retardation. The in-plane retardation Re can be determined according to the formula:

$$Re = |nx - ny| * d$$

where nx and ny are refractive indexes as measured in two directions perpendicular to each other in a plane, d is thickness of transparent resin shaped article, and * refers to product.

The transparent resin constituting the transparent resin shaped article is not particularly limited, and, as specific examples thereof, there can be mentioned a methacrylate resin, polycarbonate, polystyrene, an acrylonitrile-styrene copolymer, a methyl methacrylate-styrene copolymer, polyether-sulfone and polyethylene terephthlate. The transparent resin shaped article preferably has a moisture absorption of not larger than 0.3% by weight, more preferably not larger than 0.1% by weight. When the moisture absorption of the transparent resin shaped article is larger than 0.3% by weight, the fine grating shape is difficult to form with high precision because of dimensional change occurring due to absorption of moisture.

An ultraviolet rays-curable resin is also suitable as the transparent resin because the transfer of the fine grating shape can be effected easily and with high precision. A shaped article of a resin having an alicyclic structure is also suitable as the transparent resin shaped article. The alicyclic structure-having resin exhibits good fluidity in a molten state, and the transfer of the fine grating shape can be effected with high precision by injection molding. The alicyclic structure-having resin exhibits a low moisture absorption and therefore it has good dimensional stability. The alicyclic structure-having resin includes those which are above mentioned as to the electromagnetic wave shielding grid polarizer.

In the process for making a grid polarizer according to the present invention, an electrically conductive reflective material is vapor-deposited on the transparent resin shaped article having transferred thereto the fine grating shape. The electrically conductive reflective material preferably exhibits a refractive index of at least 0.04, but lower than 4.0, more preferably at least 0.04, but lower than 3.0, and an extinction coefficient of at least 0.70, more preferably at least 1.0, at a temperature of 25°C and a wavelength of 550 nm. Such electrically conductive reflective material includes, for example, silver and aluminum. If the electrically conductive reflective material exhibits a refractive index of smaller than 0.04 or at least 4.0, or an extinction coefficient of smaller than 0.70 at a temperature of 25°C and a wavelength of 550 nm, the electrically conductive reflective material tends to have poor surface reflectivity.

In the process for making a grid polarizer according to the present invention, when the electrically conductive reflective material is vapor-deposited on the transparent resin shaped article having transferred thereto the fine grating shape, the direction in which vapor deposition is carried out is chosen so as to give a structure through which s-polarized light is transmitted with a non-vapor-deposited portion of the electrically conductive reflective material remaining on the fine grating shape.

Fig. 15 is a view illustrating an embodiment of vapor deposition of an electrically conductive reflective material. In this embodiment, a transparent resin shaped article 14 having transferred thereto the fine grating shape (1) consisting of projecting gratings extending in a straight line and having a square cross-section perpendicular to the length direction is inclined with an inclination angle of 45 degrees to the vapor deposition source 15. The vapor deposition of the electrically conductive reflective material is carried out under such conditions to give an electromagnetic wave shielding grid polarizer having a configuration such that the upper surface of each projecting grating and one side of each projecting grating are vapor-deposited as illustrated by double lines in Fig. 15, and the bottom surface of each projecting grating and the other side thereof remain non-vapor-deposited. If desired, the vapor deposition is further carried out under conditions such that the transparent resin shaped article is inclined in the direction opposite to that shown in Fig. 15 with an inclination angle of 45 degrees to the vapor deposition source 15, whereby the other side of each projecting grating is also be vapor-deposited, and only the bottom surface of each projecting grating remains non-vapor-deposited.

The inclination angle θ of the transparent resin shaped article to the vapor-deposition source is not particularly limited, but is preferably in the range of 10 to 90 degrees. The cross-sectional shape of each projecting grating extending in a straight line constituting the fine grating shape (1), and the inclination angle θ of the transparent resin shaped article to the vapor deposition source are appropriately chosen depending upon the wavelength of light applied to the grid polarizer. Whereby the area of the fine grating shape of the transparent resin shaped article to which the vapor deposition is effected can be controlled.

As a modified embodiment, the transparent resin shaped article having transferred thereto fine gratings having a cross-section similar to that illustrated in Fig. 15 is inclined with an inclination angle of 90 degrees to the vapor deposition source. When the vapor deposition of the electrically conductive reflective material is carried out under such conditions to give a grid polarizer having a configuration such that the upper surface of each projecting grating and the bottom surface thereof are vapor-deposited, and both sides thereof remain non-vapor-deposited.

In the process for making a grid polarizer according to the present invention, a corrosion-resistant layer composed of an organic material or an inorganic material can be formed on the layer of electrically conductive reflective material vapor-deposited on the transparent resin shaped article.

Examples

The invention will now be described by the following examples that by no means limit the scope of the invention.

Example 1

Single crystal diamond rectangular parallelopiped with a size of 0.2 mm × 1 mm ×1 mm was soldered to an SUS shank having a size of 8 mm × 8 mm × 60 mm. A face having a size of 0.2 mm × 1 mm of the single crystal diamond rectangular parallelopiped was subjected to a focused ion beam treatment using argon ion beams by a focused ion beam treating apparatus "SMI3050" available from Seiko Instruments Inc. whereby a plurality of grooves having a width of 0.1 $\mu$m, a depth of 0.1 $\mu$m and a pitch of 0.2 $\mu$m and extending parallel to the side of 1 mm length were formed. A cutting tool having 1,000 linear protrusions having a width of 0.1 $\mu$m, a height of 0.1 $\mu$m and a pitch of 0.2 $\mu$m was manufactured from the focused ion beam-treated diamond.

A stainless steel SUS 430 member having a size of 152.4 mm width × 203.2 mm length × 10.0 mm thickness was subjected to nickel-phosphorus electroless plating whereby a metal deposit layer having a thickness of 100 $\mu$m was formed on the face of 152.4 mm width × 203.2 mm length of the stainless steel member. Using a precision fine working machine and the above-mentioned cutting tool, the metal deposit layer was cut to form a fine grating shape consisting of linear grooves having a width of 0.1 $\mu$m, a depth of 0.1 $\mu$m and a pitch of 0.2 $\mu$m, and extending in a straight line and parallel to the side of 203.2 mm length.

Using a single crystal diamond bite, a second grating shape consisting of gratings having a width of 10 $\mu$m, a depth of 0.5 $\mu$m and a pitch of 1 mm, and extending in a direction perpendicular to the linear grooves of the fine grating shape.

The manufacture of the above-mentioned cutting tool by focused beam treatment and the cutting of the metal deposit layer formed by nickel-phosphorus electroless plating were carried out in a thermostatic vibration-controlled chamber where the temperature was controlled within the range of 20°C ± 0.2°C and the displacement by vibration of at least 0.5 Hz was controlled below 50 $\mu$m by a vibration control system available from Showa Science K.K.

The stainless steel member having the metal deposit layer formed by nickel-phosphorus electroless plating and having fine grating shape thereon was inserted in a mold for injection molding. Using an injection molding machine with a clamp force of 2MN, a resin having an alicyclic structure ("ZEONOR 1060R" available from Zeon Corporation) was injection molded at a resin temperature of 310°C and a mold temperature of 100°C to give a flat plate for a grid polarizer having a size of 152.4 mm width × 203.2 mm length × 10.0 mm thickness. The surface of the flat plate has gratings as illustrated in Fig. 3, which comprised a fine grating shape consisting of gratings having a width of 0.1 $\mu$m, a pitch of 0.2 $\mu$m and a height of 0.1 $\mu$m, and a second grating shape consisting of gratings extending perpendicularly to the fine grating shape and having a width of 10 $\mu$m, a pitch of 1 mm and a height of 0.5 $\mu$m.

The injection-molded flat plate was set at an inclination angle of 45 degrees to a vapor deposition source so that the fine grating shape and the second grating shape were shaded. Aluminum was vapor-deposited on the upper surface of each linear protrusion and one side of each linear protrusion. Further, the flat plate was set in the opposite direction at an inclination angle of 45 degrees to the vapor deposition source, and aluminum was vapor-deposited on the other side of each linear protrusion, with the bottom face remaining no-vapor-deposited, to give an electromagnetic wave shielding grid polarizer.

S-polarized light transmittance and p-polarized light transmittance at a wavelength of 550 nm were evaluated on the thus-manufacture electromagnetic wave shielding grid polarizer by using an intensified multichannel photodetector "MCPD-3000" available from Otsuka Electronics Co., Ltd. S-polarized light transmittance was 60.5%, p-polarized light transmittance was 0.1% and thus the polarized light transmittance difference was 60.4%.

The electromagnetic wave shielding performance of the electromagnetic wave shielding grid polarizer was evaluated at 500 Hz by shielding box method using a spectrum analyzer "MS2661C" available from Anritsu Ltd. The electromagnetic wave attenuation was 42 dB.

Example 2

The entire curved surface of a stainless steel SUS 430 cylinder having a diameter of 200.0 mm and a height of 155.0 mm was subjected to nickel-phosphorus electroless plating to form a metal deposit layer having a thickness of 100 $\mu$m. Using the same cutting tool having linear protrusions as used in Example 1 and a precision fine working machine, the metal deposit layer was cut to form a fine grating shape consisting of linear grooves having a width of 0.1 $\mu$m, a depth of 0.1 $\mu$m and a pitch of 0.2 $\mu$m, and extending in a straight line and parallel to the end faces of the cylinder.

Using a single crystal diamond bite, the metal deposit layer was further cut to form a second grating shape consisting of gratings having a width of 10 $\mu$m, a depth of 0.5 $\mu$m and a pitch of 1 mm, and extending in a straight line and in the direction perpendicular to the linear grooves constituting the fine grating shape.

A resin having an alicyclic structure ("ZEONOR 1420R" available from Zeon Corporation) was extruded into a continuous film having a thickness of 100 $\mu$m and a width of 155 mm. The film was coated with an ultraviolet rays-curable acrylic resin to form a coating having a thickness of 100 nm. The film was closely joined to the cylinder having the fine grating shape and the second grating shape, and outer back side of the film was irradiated with ultraviolet rays using a high-pressure mercury lamp whereby the fine grating shape and the second grating shape were transferred to the film.

A rectangular film having a size of 152. 4 mm width $\times$ 203.2 mm length was cut from the film having transferred thereto the fine grating shape and the second grating shape. By the same procedures as mentioned in Example 1, aluminum was vapor-deposited on the upper surface of each linear grating and both sides of each linear grating to give an electromagnetic wave shielding grid polarizer.

The polarized light transmittance and the electromagnetic wave shielding performance of the electromagnetic wave shielding grid polarizer were evaluated. S-polarized light transmittance was 60.6%, p-polarized light transmittance was 0.5% and thus the polarized light transmittance difference was 60.1%. The electromagnetic wave attenuation was 41 dB.

Example 3

A metal mold member having the fine grating shape and the second grating shape was prepared by the same procedures as mentioned in Example 1. The metal mold member was subjected to metal forming using an aqueous nickel sulfamate solution to form a thin nickel film with a thickness of 300 $\mu$m. The nickel film was peeled from the metal mold member to prepare a nickel film having transferred thereto the fine grating shape and the second grating shape. The nickel film was inserted in a mold for injection molding, and the resin having an alicyclic structure was injection-molded. By the same procedures as mentioned in Example 1, an electromagnetic wave shielding grid polarizer was manufactured.

The polarized light transmittance and the electromagnetic wave shielding performance of the electromagnetic wave shielding grid polarizer were evaluated. S-polarized light transmittance was 60.3%, p-polarized light transmittance was 0.3% and thus the polarized light transmittance difference was 60.0%. The electromagnetic wave attenuation was 40 dB.

Example 4

A stainless steel SUS430 member having a size of 50 mm $\times$ 50 mm and a thickness of 10.0 mm was subjected to nickel-phosphorus electroless plating to form a metal deposit layer having a thickness of 100 $\mu$m on the square surface having a size of 50 mm $\times$ 50 mm. Then the metal deposit layer was coated with electron rays-positive resist "ZEP520" available from Zeon Corporation to form a coating having a thickness of 0.1 $\mu$m. A square area having a size of 30 mm $\times$ 30 mm on the resist-coated metal deposit layer was scanned with electron rays having a pattern comprising a fine grating shape consisting of gratings having a width of 0.1 $\mu$m and a pitch of 0.2 $\mu$m and extending linearly and parallel to one side of 30 mm length, and a second grating shape consisting of gratings having a width of 10 $\mu$m and a pitch of 1.0 mm and extending linearly and parallel to the other side of 30 mm length, by an electron rays drafting apparatus "ELS-7000" available from Elionix Co., Ltd. in manner such that the resist having said pattern of gratings was dissolved. Then the pattern was developed using an exclusive developing solution, and etched by a plasma etching apparatus "Plasmalab System 100 ICP 180" available from Oxford Instruments K.K. Then the resist was removed by an exclusive removal solvent to give a mold member having the fine grating shape consisting of gratings having a depth of 0.1 $\mu$m and the second grating shape consisting of gratings having a depth of 0.1 $\mu$m.

The area having a size of 30 mm $\times$ 30 mm having the fine grating shape and the second grating shape was cut from the mold member, and an electromagnetic wave shielding grid polarizer was manufactured from the cut area by the same procedures as mentioned in Example 1.

The polarized light transmittance and the electromagnetic wave shielding performance of the electromagnetic wave shielding grid polarizer were evaluated. S-polarized light transmittance was 59.9%, p-polarized light transmittance was 1.3% and thus the polarized light transmittance difference was 58.6%. The electromagnetic wave attenuation was 37 dB.

Example 5

A glass substrate having a size of 50 mm × 50 mm and a thickness of 1.0 mm and a roughness Ra of 0.01 um was coated with an electron rays-negative resist "ZEN4200" available from Zeon Corporation to form a coating having a thickness of 0.1 $\mu$m on one surface having a size of 50 mm × 50 mm. A square area having a size of 30 mm × 30 mm on the resist-coated surface was scanned with electron rays having a pattern comprising a fine grating shape consisting of gratings having a width of 0.1 $\mu$m and a pitch of 0.2 $\mu$m and extending linearly and parallel to one side of 30 mm length, and a second grating shape consisting of gratings having a width of 10 $\mu$m and a pitch of 1.0 mm and extending linearly and parallel to the other side of 30 mm length, by an electron rays drafting apparatus "ELS-7000" available from Elionix Co., Ltd., in a manner such that the resist having said pattern of gratings remained. Then the pattern was developed using an exclusive developing solution to give a glass member having a resist pattern having the fine grating shape consisting of gratings having a height of 0.1 $\mu$m and the second grating shape consisting of gratings having a height of 0.1 $\mu$m. Then the glass member was subjected to electroforming using an aqueous nickel sulfamate solution to form a nickel coating having a thickness of 300 $\mu$m. The nickel coating was peeled from the glass member to give a metal film having the fine grating shape and the second grating shape.

The area having a size of 30 mm × 30 mm having the fine grating shape and the second grating shape was cut from the metal film, and an electromagnetic wave shielding grid polarizer was manufactured from the cut area by the same procedures as mentioned in Example 1.

The polarized light transmittance and the electromagnetic wave shielding performance of the electromagnetic wave shielding grid polarizer were evaluated. S-polarized light transmittance was 59.5%, p-polarized light transmittance was 1.2% and thus the polarized light transmittance difference was 58.3%. The electromagnetic wave attenuation was 36 dB.

Example 6

Aluminum was vapor-deposited on a glass substrate having a size of 50 mm × 50 mm and a thickness of 1.0 mm to form an aluminum deposition layer having a thickness of 0.1 $\mu$m, and the aluminum deposition layer was coated with an electron rays-negative resist "ZEN4200" available from Zeon Corporation. A square area having a size of 30 mm × 30 mm on the resist-coated surface was scanned with electron rays having a pattern comprising a fine grating shape consisting of gratings having a width of 0.1 $\mu$m and a pitch of 0.2 $\mu$m and extending linearly and parallel to one side of 30 mm length, and a second grating shape consisting of gratings having a width of 10 $\mu$m and a pitch of 1.0 mm and extending linearly and parallel to the other side of 30 mm length, by an electron rays drafting apparatus "ELS-7000" available from Elionix Co., Ltd., in a manner such that the resist having said pattern of gratings remained. Then the pattern was developed using an exclusive developing solution, and then, etched by using a plasma etching apparatus "Plasmalab System 100 ICP 180" available from Oxford Instruments K.K. Then the resist was removed by an exclusive removal solvent, and an electromagnetic wave shielding grid polarizer having the fine grating shape consisting of gratings having a height of 0.1 $\mu$m and the second grating shape consisting of gratings having a height of 0.1 $\mu$m was manufactured by the same procedures as mentioned in Example 1.

The polarized light transmittance and the electromagnetic wave shielding performance of the electromagnetic wave shielding grid polarizer were evaluated. S-polarized light transmittance was 59.2% p-polarized light transmittance was 1.5% and thus the polarized light transmittance difference was 57.7% The electromagnetic wave attenuation was 36 dB.

Comparative Example 1

A stainless steel member was fabricated by the same procedures as described in Example 1 wherein the fine grating shape was formed by cutting but the second grating shape was not formed with all other conditions remaining the same.

The stainless steel member having the fine grating shape was inserted in a mold for injection molding, and injection molding was carried out in the same manner as in Example 1 to give a flat plate for a grid polarizer. Aluminum was deposited on the flat plate to give a grid polarizer.

The polarized light transmittance and the electromagnetic wave shielding performance of the grid polarizer were evaluated in the same manner as in Example 1. S-polarized light transmittance was 61.0%, p-polarized light transmittance was 0.2% and thus the polarized light transmittance difference was 60.8%. The electromagnetic wave attenuation was 3.0 dB.

Comparative Example 2

A cylindrical stainless steel member was fabricated by the same procedures as described in Example 2 wherein the fine grating shape was formed by cutting but the second grating shape was not formed with all other conditions remaining the same.

Using the cylindrical stainless steel member having the fine grating shape, a film for grid polarizer was made by the same procedures as mentioned in Example 2. Aluminum was deposited on the film to give a grid polarizer.

The polarized light transmittance and the electromagnetic wave shielding performance of the grid polarizer were evaluated in the same manner as in Example 2. S-polarized light transmittance was 60.9%, p-polarized light transmittance was 0.2% and thus the polarized light transmittance difference was 60.7%. The electromagnetic wave attenuation was 2.6 dB.

Comparative Example 3

A nickel film having gratings was fabricated by the same procedures as described in Example 3 wherein the fine grating shape was formed but the second grating shape was not formed with all other conditions remaining the same. An area having a size of 30 mm × 30 mm having the fine grating shape was cut from the nickel film, and a grid polarizer was manufactured from the cut area by the same procedures as mentioned in Example 3.

The polarized light transmittance and the electromagnetic wave shielding performance of the grid polarizer were evaluated in the same manner as in Example 3. S-polarized light transmittance was 60.5%, p-polarized light transmittance was 0.2% and thus the polarized light transmittance difference was 60.3%. The electromagnetic wave attenuation was 2.6 dB.

Comparative Example 4

A mold member having gratings was fabricated by the same procedures as described in Example 4 wherein the fine grating shape was formed but the second grating shape was not formed with all other conditions remaining the same. An area having a size of 30 mm × 30 mm having the fine grating shape was cut from the mold member, and a grid polarizer was manufactured from the cut area by the same procedures as mentioned in Example 4.

The polarized light transmittance and the electromagnetic wave shielding performance of the grid polarizer were evaluated in the same manner as in Example 4. S-polarized light transmittance was 59.8%, p-polarized light transmittance was 0.4% and thus the polarized light transmittance difference was 59.4%. The electromagnetic wave attenuation was 2.7 dB.

Comparative Example 5

A metal film having gratings was fabricated by the same procedures as described in Example 5 wherein the fine grating shape was formed but the second grating shape was not formed with all other conditions remaining the same. An area having a size of 30 mm × 30 mm having the fine grating shape was cut from the metal film, and a grid polarizer was manufactured from the cut area by the same procedures as mentioned in Example 5.

The polarized light transmittance and the electromagnetic wave shielding performance of the grid polarizer were evaluated in the same manner as in Example 5. S-polarized light transmittance was 59.8%, p-polarized light transmittance was 0.4% and thus the polarized light transmittance difference was 59.4%. The electromagnetic wave attenuation was 2.7 dB.

Comparative Example 6

A grid polarizer having gratings was manufactured by the same procedures as described in Example 6 wherein the fine grating shape was formed but the second grating shape was not formed with all other conditions remaining the same.

The polarized light transmittance and the electromagnetic wave shielding performance of the grid polarizer were evaluated in the same manner as in Example 6. S-polarized light transmittance was 59.4%, p-polarized light transmittance was 1.7% and thus the polarized light transmittance difference was 57.7%. The electromagnetic wave attenuation was 2.8 dB.

Example 7

An electromagnetic wave shielding grid polarizer having a fine grating shape, a second grating shape and a third grating shape, as illustrated in Fig. 7, was manufactured.

A stainless steel SUS 430 member having a size of 152.4 mm width × 203.2 mm length × 10.0 mm thickness was subjected to nickel-phosphorus electroless plating whereby a metal deposit layer having a thickness of 100 $\mu$m was formed on the face of 152.4 mm width × 203.2 mm length of the stainless steel member. Using a precision fine working machine and the same cutting tool as made in Example 1, the metal deposit layer was cut to form a fine grating shape consisting of linear grooves having a width of 0.1 $\mu$m, a depth of 0.1 $\mu$m and a pitch of 0.2 $\mu$m, and extending in a straight line and parallel to the side of 203.2 mm length. The cutting of the metal deposit layer formed by nickel-phosphorus electroless plating was carried out in a thermostatic vibration-controlled chamber where the temperature and the displacement by vibration were controlled under the same conditions as described in Example 1.

Using a single crystal diamond bite, a second grating shape consisting of gratings having a width of 10 $\mu$m, a depth of 0.5 $\mu$m and a pitch of 1 mm, and extending in a direction perpendicular to the linear grooves of the fine grating shape, was formed by cutting, and further, a third grating shape consisting of gratings having a width of 10 $\mu$m, a depth of 0.5 $\mu$m and a pitch of 1 mm, and extending in a direction at an inclination angle of 60 degrees to the linear grooves of the fine grating shape, was formed by cutting.

The stainless steel member having the metal deposit layer formed by nickel-phosphorus electroless plating and having fine grating shape thereon was inserted in a mold for injection molding. By the same procedures and conditions as those described in Example 1, a resin having an alicyclic structure ("ZEONOR 1060R" available from Zeon Corporation) was injection molded to give a flat plate for a grid polarizer having a size of 152.4 mm width × 203.2 mm length × 1.0 mm thickness. The surface of the flat plate has gratings as illustrated in Fig. 7, which comprised a fine grating shape consisting of gratings having a width of 0.1 $\mu$m, a pitch of 0.2 $\mu$m and a height of 0.1 $\mu$m, a second grating shape consisting of gratings extending perpendicularly to the fine grating shape and having a width of 10 $\mu$m, a pitch of 1 mm and a height of 0.5 $\mu$m, and a third grating shape consisting of gratings crossing the fine grating shape at an angle of 60 degrees and having a width of 10 $\mu$m, a pitch of 1 mm and a height of $0.5\mu$ m. By the same procedures as described in Example 1, aluminum was vapor-deposited on the projecting gratings of the fine grating shape, the second grating shape and the third grating shape so that only the bottom face between adjacent projecting gratings remained no-vapor-deposited, to give an electromagnetic wave shielding grid polarizer.

The polarized light transmittance and the electromagnetic wave shielding performance of the electromagnetic wave shielding grid polarizer were evaluated in the same manner as in Example 1. S-polarized light transmittance was 60.3%, p-polarized light transmittance was 0.1% and thus the polarized light transmittance difference was 60.2%. The electromagnetic wave attenuation was 43 dB.

Example 8

An electromagnetic wave shielding grid polarizer having a fine grating shape and a sinusoidal waveform curve as illustrated in Fig. 8 was manufactured.

Aluminum was vapor-deposited on a glass substrate having a size of 50 mm × 50 mm and a thickness of 1.0 mm to form an aluminum deposition layer having a thickness of 0.1 $\mu$m, and the aluminum deposition layer was coated with an electron rays-negative resist "ZEN4200" available from Zeon Corporation. A square area having a size of 30 mm × 30 mm on the resist-coated surface was scanned with electron rays having a pattern comprising a fine grating shape consisting of gratings having a width of 0.1 $\mu$m and a pitch of 0.2 $\mu$m and extending linearly and parallel to one side of 30 mm length, and a group of sinusoidal waveform curves crossing the fine grating shape and having a width of 10 $\mu$m, a pitch of 1.0 mm, an amplitude of 200 $\mu$m and a frequency of 650 $\mu$m and a 180 degrees phase shift, by an electron rays drafting apparatus "ELS-7000" available from Elionix Co., Ltd., in a manner such that the resist having said pattern remained. Then the pattern was developed using an exclusive developing solution, and then, etched by using a plasma etching apparatus "Plasmalab System 100 ICP 180" available from Oxford Instruments K.K. Then the resist was removed by an exclusive removal solvent, and an electromagnetic wave shielding grid polarizer having the fine grating shape consisting of gratings having a depth of 0.1 $\mu$m and the sinusoidal waveform-curved gratings was manufactured.

The polarized light transmittance and the electromagnetic wave shielding performance of the electromagnetic wave shielding grid polarizer were evaluated in the same manner as in Example 1. S-polarized light transmittance was 59.2% p-polarized light transmittance was 1.4% and thus the polarized light transmittance difference was 57.8% The electromagnetic wave attenuation was 34 dB.

The evaluation results obtained in Examples 1-6, those in Comparative Examples 1-6, and those in Examples 7 and 8 are shown in Table 1-1, 1-2 and 2, respectively.

Table 1-1

| Example | Fine grating shape | Second grating shape | Making method | Polarized light transmittance difference (%) | Electromagnetic wave attenuation (dB) |
|---|---|---|---|---|---|
| 1 | Width 0.1 μm Pitch 0.2 μm Height 0.1 μm | Width 10 μm Pitch 1.0 μm Height 0.5 μm | Gratings formation on mold member (machining) / injection molding/ Al vapor deposition | 60.4 | 42 |
| 2 | | | Gratings formation on mold member (machining) / roll tansfer/ Al vapor deposition | 60.1 | 41 |
| 3 | | | Gratings formation on mold member (machining) / tansfer to metal film/ injection molding / Al vapor deposition | 60.0 | 40 |
| 4 | | | Gratings formation on mold member (photolithography) / injection molding / Al vapor deposition | 58.6 | 37 |
| 5 | | | Gratings formation on mold member (photolithography) / transfer to metal film / injection molding/ Al vapor deposition | 58.3 | 36 |
| 6 | | | Al vapor deposition on glass /photolithography/ development / etching | 57.7 | 36 |

Table 1-2

| Comparative Example | Fine grating shape | Second grating shape | Making method | Polarized light transmittance difference (%) | Electromagnetic wave attenuation (dB) |
|---|---|---|---|---|---|
| 1 | Width 0.1 $\mu$m Pitch 0.2 $\mu$m Height 0.1 $\mu$m | None | Gratings formation on mold member (machining) / injection molding/ Al vapor deposition | 60.8 | 3.0 |
| 2 | | | Gratings formation on mold member (machining) / roll tansfer/ Al vapor deposition | - | 2.6 |
| 3 | | | Gratings formation on mold member (machining) / tansfer to metal film/ injection molding / Al vapor deposition | 60.3 | 2.6 |
| 4 | | | Gratings formation on mold member (photolithography) / injection molding / Al vapor deposition | 59.4 | 2.7 |
| 5 | | | Gratings formation on mold member (photolithography) / transfer to metal film / injection molding/ Al vapor deposition | 59.4 | 2.7 |
| 6 | | | Al vapor deposition on glass /photolithography/ development / etching | 57.7 | 2.8 |

Table 2

| Example | Fine grating shape | Shape crossing fine grating shape | Making method | Polarized light transmittance difference (%) | Electromagnetic wave attenuation (dB) |
|---|---|---|---|---|---|
| 7 | Width 0.1 $\mu$m<br>Pitch 0.2 $\mu$m<br>Height 0.1 $\mu$m | Second shape perpendicularly crosssing fine grating shape<br>Width 10 $\mu$m<br>Pitch 1.0 $\mu$m<br>Height 0.5$\mu$m<br>Third shape crossing at 60 degres fine grating shape<br>Width 10 $\mu$m<br>Pitch 1.0 $\mu$m<br>Height 0.5 $\mu$m | Gratings formation on mold member (macinining) / injection molding / Al vapor deposition | 60.2 | 43 |
| 8 | Width 0.1 $\mu$m<br>Pitch 0.2 $\mu$m<br>Height 0.1 $\mu$m | Second shape sinusoidal waveform curve<br>Width 10 $\mu$m<br>Pitch 1.0 $\mu$m<br>Amplitude 200 $\mu$m<br>Frequency 650 $\mu$m | Al vapor deposition on glass / photolithography / development / etching | 57.8 | 34 |

As seen from Tables 1-1 and 1-2, the electromagnetic wave shielding grid polarizers in Examples 1-6 and the grid polarizers in Comparative Examples 1-6 exhibited s-polarized light transmittance and p-polarized light transmittance, both of which exceeded 57%, and thus they have satisfactory polarizing characteristics. However, the grid polarizers in Comparative Examples 1-6 exhibited an electromagnetic attenuation of about 3 dB, and thus, they do not have substantial electromagnetic wave shielding performance. In contrast, the electromagnetic wave shielding grid polarizers having the fine grating shape and the second grating shape in Examples 1-6 exhibited an electromagnetic attenuation of about 40 dB, and thus, they have good electromagnetic wave shielding performance.

As seen from Table 2, the electromagnetic wave shielding grid polarizer in Example 7, which further has the third grating shape in addition to the fine grating shape and the second grating shape of the electromagnetic wave shielding grid polarizer in Example 1, exhibited a polarized light transmittance reduced only to a slight extent, but an electromagnetic attenuation increased to a slight extent, as compared with those of the electromagnetic wave shielding grid polarizer in Example 1. The electromagnetic wave shielding grid polarizer in Example 8, which has the fine grating shape and the sinusoidal waveform-curved gratings, exhibited good polarizing characteristics and electromagnetic wave shielding performance.

Example 9

Single crystal diamond rectangular parallelopiped with a size of 0.2 mm $\times$ 1 mm $\times$ 1 mm was soldered to an SUS shank having a size of 8 mm $\times$ 8 mm $\times$ 60 mm. A face having a size of 0.2 mm $\times$ 1 mm of the single crystal diamond rectangular parallelopiped was subjected to a focused ion beam treatment using argon ion beams by a focused ion beam treating apparatus "SMI3050" available from Seiko Instruments Inc. whereby a plurality of grooves having a width of 0.1 $\mu$m, a depth of 0.1 $\mu$m and a pitch of 0.2 $\mu$m and extending parallel to the side of 1 mm length were formed. A cutting tool having 1,000 linear protrusions having a width of 0.1 $\mu$m, a height of 0.1 $\mu$m and a pitch of 0.2 $\mu$m was manufactured from the focused ion beam-treated diamond.

A stainless steel SUS 430 member having a size of 152.4 mm width $\times$ 203.2 mm length $\times$ 10.0 mm thickness was subjected to nickel-phosphorus electroless plating whereby a metal deposit layer having a thickness of 100 $\mu$m was formed on the face of 152.4 mm width $\times$ 203.2 mm length of the stainless steel member. Using a precision superfine working machine "NIC200" available from Nagase Integrecs Co. , Ltd. , and the above-mentioned cutting tool, the metal deposit layer was cut to form a fine grating shape consisting of linear protrusions having a width of 0. 1 $\mu$m, a depth of

0.1 μm and a pitch of 0.2 μm, and extending in a straight line and parallel to the side of 203.2 mm length.

The manufacture of the above-mentioned cutting tool by focused beam treatment and the cutting of the metal deposit layer formed by nickel-phosphorus electroless plating were carried out in a thermostatic vibration-controlled chamber where the temperature was controlled within the range of 20°C ± 0.2°C and the displacement by vibration of at least 0.5 Hz was controlled below 10 μm by a vibration control system available from Showa Science K.K.

The stainless steel member having the metal deposit layer formed by nickel-phosphorus electroless plating and having fine grating shape thereon was inserted in a mold for injection molding. Using an injection molding machine with a clamp force of 2MN "JSW-ELIII" available from The Japan Steel Works LTD, a resin having an alicyclic structure ("ZEONOR 1060R" available from Zeon Corporation) was injection molded at a resin temperature of 310°C and a mold temperature of 100°C to give a flat plate for a grid polarizer having a size of 152.4 mm width × 203.2 mm length × 10.0 mm thickness.

The injection-molded flat plate was set at an inclination angle of 45 degrees to a vapor deposition source, and aluminum was vapor-deposited on the upper surface of each linear protrusion and one side of each linear protrusion, with the other side of each linear protrusion and the bottom face thereof remaining no-vapor-deposited, to give a grid polarizer.

S-polarized light transmittance and p-polarized light transmittance at a wavelength of 550 nm were evaluated on the thus-manufactured grid polarizer by using an intensified multichannel photodetector "MCPD-3000" available from Otsuka Electronics Co., Ltd. S-polarized light transmittance was 60. 9%, p-polarized light transmittance was 0.1% and thus the polarized light transmittance difference was 60.8%.

Example 10

The entire curved surface of a stainless steel SUS 430 cylinder having a diameter of 200.0 mm and a height of 155.0 mm was subjected to nickel-phosphorus electroless plating to form a metal deposit layer having a thickness of 100 μm. Using the same cutting tool having linear protrusions as used in Example 1 and a precision fine cylindrical grinding machine (Precision fine external cylindrical grinding machine "S30-1" available from Studer Schaudt GmbH), the metal deposit layer was cut to form a fine grating shape consisting of linear protrusions having a width of 0.1 μm, a depth of 0.1 μm and a pitch of 0.2 μm, and extending in a straight line and parallel to the end faces of the cylinder.

A resin having an alicyclic structure ("ZEONOR 1420R" available from Zeon Corporation) was extruded into a continuous film having a thickness of 100 μm and a width of 155 mm. The film was coated with an ultraviolet rays-curable acrylic resin to form a coating having a thickness of 100 nm. The film was closely joined to the cylinder having the fine grating shape, and outer back side of the film was irradiated with ultraviolet rays using a high-pressure mercury lamp whereby the fine grating shape was transferred to the film.

A rectangular film having a size of 152.4 mm width × 203.2 mm length was cut from the film having transferred thereto the fine grating shape. By the same procedures as mentioned in Example 9, aluminum was vapor-deposited on the upper surface of each linear grating and both sides of each linear grating to give a grid polarizer.

The polarized light transmittance of the grid polarizer was evaluated. S-polarized light transmittance was 61.3%, p-polarized light transmittance was 0.1% and thus the polarized light transmittance difference was 61.2%.

Example 11

The stainless steel member having the metal deposit layer formed by nickel-phosphorus electroless plating and the fine grating shape, prepared in Example 9, was subjected to metal forming using an aqueous nickel sulfamate solution to form a thin nickel film with a thickness of 300 μm. The nickel film was peeled from the metal mold member to prepare a nickel film having transferred thereto the fine grating shape. The nickel film was inserted in a mold for injection molding, and, by the same procedures as mentioned in Example 9, a grid polarizer was manufactured.

The polarized light transmittance of the grid polarizer was evaluated. S-polarized light transmittance was 61.2%, p-polarized light transmittance was 0.1% and thus the polarized light transmittance difference was 61.1%.

Comparative Example 7

Aluminum was vapor-deposited on a glass substrate having a size of 30.0 mm × 30.0 mm and a thickness of 1.0 mm to form an aluminum deposition layer having a thickness of 0.1 μm, and the aluminum deposition layer was coated with an electron rays resist "ZEP520" available from Zeon Corporation. The resist-coated surface was scanned with electron rays having a pattern comprising a fine grating shape consisting of gratings having a width of 0.1 μm and a pitch of 0.2 μm and extending linearly and parallel to one side of 30 mm length. Then the pattern was developed using an exclusive developing solution, and then, etched by using a plasma etching apparatus "Plasmalab System 100 ICP 180" available from Oxford Instruments K.K. Thus, a grid polarizer was manufactured.

The polarized light transmittance of the grid polarizer was evaluated. S-polarized light transmittance was 57.0% p-polarized light transmittance was 0.5%, and thus the polarized light transmittance difference was 56.5%.

The results obtained in Examples 9-11 and Comparative Example 7 are shown in Table 3.

Table 3

| Example | Making method for mold member | Making method for grid polarizer | s-Polarized light transmittance (%) | p-Polarized light transmittance (%) | Polarized light transmittance difference (%) |
|---|---|---|---|---|---|
| Ex. 9 | Cutting of Ni-P layer | Injection molding / Al oblique vapor deposition | 60.9 | 0.1 | 60.8 |
| Ex. 10 | Cutting of Ni-P layer (roll) | Roll shaping / Al oblique vapor deposition | 61.3 | 0.1 | 61.2 |
| Ex. 11 | Electroforming of shaped gratings with Ni sulfamate | Injection molding / Al oblique vapor deposition | 61.2 | 0.1 | 61.2 |
| Comp. Ex. 7 | - | Al vapor deposition on glass / resist coating / electron rays drafting / development / etching | 57 | 0.5 | 56.5 |

As seen from Table 3, the grid polarizers prepared in Examples 9-11 by the steps of forming a fine grating shape on nickel-phosphorus-electroless plated stainless steel using cutting tool manufactured by focused ion beam from diamond tool material; transferring the fine grating shape on the nickel-phosphorus layer directly or through a metal film to a transparent resin shaped article; and then, vapor-depositing aluminum on the fine grating shape, exhibited large s-polarized light transmittance and p-polarized transmittance. In contrast, the grid polarizer, which was prepared in Comparative Example 7 by the steps of vapor-depositing aluminum on glass substrate; coating the aluminum deposition layer with a resist; drafting with electron rays; developing; and then etching, exhibited small s-polarized light transmittance and p-polarized transmittance. Thus, the grid polarizer manufactured by the process of the present invention has good polarizing characteristics.

Industrial Applicability

The electromagnetic wave shielding grid polarizer according to the present invention has good and well-balanced polarizing characteristics and electromagnetic wave shielding performance. A liquid crystal display provided with the electromagnetic wave shielding grid polarizer protects peripheral electronic instruments from electromagnetic waves with wavelength of 10 $\mu$m to $10^6$ m. Wrong operation of the peripheral electronic instruments due to the adverse influence of electromagnetic waves can be avoided. The electromagnetic wave shielding grid polarizer with a large area can be made at a reduced cost according to the process of the present invention

The process for manufacturing a grid polarizer according to the present invention including the steps of precision fine working and vapor deposition gives a grid polarizer with a large area having a fine grating shape with a size of sub-micron order and exhibiting good polarizing characteristics.

**Claims**

1. An electromagnetic wave shielding grid polarizer **characterized in that**:

   a fine grating shape (1) consisting of projecting gratings extending linearly and parallel to each other, and at least one group of grating shape (2) consisting of gratings extending parallel to each other and having a width of 0.1 to 500 $\mu$m and a pitch of 1 $\mu$m to 100 mm, which cross the projecting gratings constituting the fine grating shape (1), are formed;

the total length of portions of the projecting gratings constituting the fine grating shape (1) which portions have lengths $10^{-5}$ to $10^{-1}$ times the wavelength of electromagnetic wave to be blocked, is 80% or more out of the total length of the portions of projecting gratings constituting the fine grating shape (1) which portions are segmented by the gratings constituting said at least one group of grating shape (2); and

at least part of each projecting grating constituting the fine grating shape (1) and at least part of each grating constituting each group of grating shape (2) are made of electrically conductive reflective material, and said parts of the gratings made of electrically conductive reflective material are electrically interconnected to each other.

2. The electromagnetic wave shielding grid polarizer according to claim 1, wherein the fine grating shape (1) consists of projecting gratings extending linearly and parallel to each other and having a width of 50 to 600 nm, a pitch of 50 to 1,000 nm, and a height of 50 to 800 nm.

3. The electromagnetic wave shielding grid polarizer according to claim 1 or 2, wherein each group of the grating shape (2) consists of gratings extending linearly and parallel to each other.

4. The electromagnetic wave shielding grid polarizer according to claim 1 or 2, wherein each group of the grating shape (2) consists of gratings extending parallel to each other in a regular geometrical curve.

5. The electromagnetic wave shielding grid polarizer according to any one of claims 1 to 4, wherein adjacent two projecting gratings constituting the fine grating shape (1) and adjacent two gratings constituting each group of grating shape (2) form a quadrilateral having a minor diagonal $10^{-5}$ to $10^{-1}$ times the wavelength of electromagnetic wave to be blocked.

6. The electromagnetic wave shielding grid polarizer according to claim 1 or 2, wherein the gratings constituting each group of grating shape (2) have a height equal to that of the projecting gratings constituting the fine grating shape (1), and form projecting gratings extending parallel to each other.

7. The electromagnetic wave shielding grid polarizer according to claim 1 or 2, wherein the projecting gratings constituting the fine grating shape (1) are cut to a base level of the fine grating shape (1) at the intersections between the projecting gratings constituting the fine grating shape (1) and the gratings constituting each group of grating shape (2).

8. The electromagnetic wave shielding grid polarizer according to claim 1 or 2, wherein the gratings constituting each group of grating shape (2) have a height higher than that of the projecting gratings constituting the fine grating shape (1), and form projecting gratings extending parallel to each other.

9. The electromagnetic wave shielding grid polarizer according to claim 1 or 2, wherein the gratings constituting each group of grating shape (2) have a height lower than that of the projecting gratings constituting the fine grating shape (1), and form projecting gratings extending parallel to each other.

10. The electromagnetic wave shielding grid polarizer according to claim 1 or 2, wherein the gratings constituting each group of grating shape (2) are cut to a depth lower than the base level of the fine grating shape (1), and form grooves extending parallel to each other.

11. The electromagnetic wave shielding grid polarizer according to claim 1 or 2, which exhibits an electromagnetic wave attenuation of at least 20 dB as measured at 500 Hz of electromagnetic waves by a shielding box method.

12. An electromagnetic wave shielding grid polarizer **characterized in that** a fine grating shape (1) consisting of projecting gratings having a width of 50 to 600 nm, a pitch of 50 to 1,000 nm and a height of 50 to 800 nm and extending linearly and parallel to each other, and at least one group of grating shape (2) consisting of gratings having a width of 0.1 to 500 $\mu$m and a pitch of 1 $\mu$m to 100 mm and extending linearly and parallel to each other, which cross the projecting gratings constituting the fine grating shape (1), are formed;

adjacent two projecting gratings constituting the fine grating shape (1) and adjacent two gratings constituting each group of grating shape (2) form a quadrilateral having a minor diagonal $10^{-5}$ to $10^{-1}$ times the wavelength of electromagnetic wave to be blocked; and

at least part of each projecting grating constituting the fine grating shape (1) and at least part of each grating constituting each group of grating shape (2) are made of electrically conductive reflective material, and said parts of the gratings made of electrically conductive reflective material are electrically interconnected to each other.

13. A process for making the electromagnetic wave shielding grid polarizer as claimed in any one of claims 1 to 12, which comprises the steps of:

transferring a grooves shape of a mold or a metal plate, which consist of a group of a plurality of grooves with a depth of 50 to 800 nm extending linearly and parallel to each other, to a shaped article of a transparent resin; and vapor-depositing an electrically conductive reflective material onto the transparent resin shaped article having the transferred groove shape.

14. The process for making the electromagnetic wave shielding grid polarizer according to claim 13, wherein the mold or metal plate having the grooves shape consisting of grooves extending linearly is a metal mold which is made by a method using a tool having linear protrusions at its end with a width of not larger than 600 nm extending linearly and parallel to each other, said tool being made by processing a material having a Mohs hardness of at least 9 applying high-energy radiation.

15. The process for making the electromagnetic wave shielding grid polarizer according to claim 13, wherein the mold or metal plate having the grooves shape consisting of grooves extending linearly is a metal mold which is made by a method of coating a mold member with a resist, the resist coating is exposed to active radiation, developing the exposed resist, and etching the mold member.

16. The process for making the electromagnetic wave shielding grid polarizer according to claim 13, wherein the mold or metal plate having the grooves shape consisting of grooves extending linearly is a metal mold which is made by a method of coating a base with a smooth surface with a resist, exposing the resist coating to active radiation, developing the exposed resist, and then etching the resist to form a group of linear protrusions having a width of 50 to 600 nm, a pitch of 50 to 1,000 nm and a height of 50 to 800 nm and extending linearly and parallel to each other, and transferring the group of linear protrusions to a metal mold.

17. A process for making the electromagnetic wave shielding grid polarizer as claimed in any one of claims 1 to 12, which comprises the steps of:

forming a layer of an electrically conductive reflective material having a thickness of 50 to 800 nm on a transparent base, coating the layer of electrically conductive reflective material formed on the transparent base layer, with a resist, exposing the resist coating to active radiation, developing the exposed resist, and then etching the layer of electrically conductive reflective material.

18. A process for making a grid polarizer **characterized in that**:

(A) a material having a Mohs hardness of at least 9 is processed by applying high-energy radiation to make a tool having linear protrusions at its end with a width of not larger than 600 nm; (B) a fine grating shape consisting of gratings having a width of 50 to 600 nm, a pitch of 50 to 1,000 nm and a height of 50 to 800 nm is formed on a mold member by using the tool; (C) the fine grating shape formed on the mold member is transferred to a shaped article of a transparent resin; and (D) an electrically conductive reflective material is vapor-deposited on the transparent resin shaped article having transferred thereto the fine grating shape.

19. A process for making a grid polarizer **characterized in that**:

(A) a material having a Mohs hardness of at least 9 is processed by applying high-energy radiation to make a tool having linear protrusions at its end with a width of not larger than 600 nm; (B) a fine grating shape consisting of gratings having a width of 50 to 600 nm, a pitch of 50 to 1,000 nm and a height of 50 to 800 nm is formed on a mold member by using the tool; (C) the fine grating shape formed on the mold member is transferred to a metal plate; (D) the fine grating shape transferred to the metal plate is transferred to a shaped article of a transparent resin; and (E) an electrically conductive reflective material is vapor-deposited on the transparent resin shaped article having transferred thereto the fine grating shape.

**20.** The process for making the grid polarizer according to claim 18 or 19, wherein the tool made from the material having a Mohs hardness of at least 9 has a plurality of the protrusions.

**21.** The process for making the grid polarizer according to any one of claims 18, 19 and 20, wherein the fine grating shape is formed on the mold member using a precision fine working machine having a precision of not larger than 100 nm in the movable X, Y and Z axes, and a tool having a working surface with an arithmetic mean surface roughness (Ra) of not larger than 10 nm, in a thermostatic vibration-controlled chamber where the temperature is controlled within $\pm$ 0.5°C and the displacement at a vibration of at least 0.5 Hz is controlled to a value not larger than 50 $\mu$m.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

## INTERNATIONAL SEARCH REPORT

| | International application No. |
| --- | --- |
| | PCT/JP2005/012111 |

A. CLASSIFICATION OF SUBJECT MATTER
Int.Cl$^7$  G02B5/30

According to International Patent Classification (IPC) or to both national classification and IPC

B. FIELDS SEARCHED

Minimum documentation searched (classification system followed by classification symbols)
Int.Cl$^7$  G02B5/30

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2003-502708 A  (MOXTEK),<br>21 January, 2003 (21.01.03),<br>Description; Par. No. [0012]; Fig. 1<br>& US 6122103 A       & WO 2000/079317 A1 | 1-21 |
| A | JP 9-288211 A  (Sony Corp.),<br>04 November, 1997 (04.11.97),<br>Description; Par. No. [0020]; Fig. 1<br>(Family: none) | 1-21 |
| A | JP 2002-311382 A  (Matsushita Electric<br>Industrial Co., Ltd.),<br>23 October, 2002 (23.10.02),<br>Description; Par. No. [0045]; Fig. 2<br>(Family: none) | 1-21 |

| [X] Further documents are listed in the continuation of Box C. | [ ] See patent family annex. |

| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    29 August, 2005 (29.08.05) | Date of mailing of the international search report<br>    13 September, 2005 (13.09.05) |
| --- | --- |
| Name and mailing address of the ISA/<br>    Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2005/012111 |

C (Continuation).　DOCUMENTS CONSIDERED TO BE RELEVANT

| Category* | Citation of document, with indication, where appropriate, of the relevant passages | Relevant to claim No. |
| --- | --- | --- |
| A | JP 2002-328234 A (Eastman Kodak Co.),<br>15 November, 2002 (15.11.02),<br>Description; Par. No. [0014]; Fig. 1<br>& US 2002/122235 A1　　& EP 1239308 A3 | 1-21 |
| A | JP 2-228608 A (Shimadzu Corp.),<br>11 September, 1990 (11.09.90),<br>Full text; all drawings<br>(Family: none) | 1-21 |
| A | JP 7-294730 A (Kyocera Corp.),<br>10 November, 1995 (10.11.95),<br>Full text; all drawings<br>(Family: none) | 13,18-21 |
| A | JP 2001-330728 A (Hitachi, Ltd.),<br>30 November, 2001 (30.11.01),<br>Full text; all drawings<br>& US 2001/53023 A1　　& EP 1158319 A2 | 13,18-21 |
| A | JP 49-90149 A (Hitachi, Ltd.),<br>28 August, 1974 (28.08.74),<br>Full text; all drawings<br>(Family: none) | 13,18-21 |
| A | JP 2002-357716 A (Mitsubishi Chemical Corp.),<br>13 December, 2002 (13.12.02),<br>Description; Par. Nos. [0035] to [0037]<br>(Family: none) | 13-16,18-21 |

Form PCT/ISA/210 (continuation of second sheet) (January 2004)

## INTERNATIONAL SEARCH REPORT

| | |
|---|---|
| | International application No. |
| | PCT/JP2005/012111 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
       because they relate to subject matter not required to be searched by this Authority, namely:

2. ☐ Claims Nos.:
       because they relate to parts of the international application that do not comply with the prescribed requirements to such an
       extent that no meaningful international search can be carried out, specifically:

3. ☐ Claims Nos.:
       because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
    The inventions of claims 1-17 relate to a grid polarizer having a function
of polarizing and blocking an electromagnetic wave by forming a fine grating
shape (1) and at least one set of grating shape (2) crossing the fine grating
shape (1) or a method of manufacturing the grid polarizer.  The inventions
of claims 18-21 relate to a method of manufacturing a grid polarizer having
the fine grating shape (1) by simply using a tool having a Mohs hardness of
9 or more, a metal mold, metal plate and a processing such as evaporation.
Therefore, both groups of inventions do not have a common special technical
feature.

1. ☐ As all required additional search fees were timely paid by the applicant, this international search report covers all searchable
       claims.

2. ☒ As all searchable claims could be searched without effort justifying an additional fee, this Authority did not invite payment of
       any additional fee.

3. ☐ As only some of the required additional search fees were timely paid by the applicant, this international search report covers
       only those claims for which fees were paid, specifically claims Nos.:

4. ☐ No required additional search fees were timely paid by the applicant.   Consequently, this international search report is
       restricted to the invention first mentioned in the claims; it is covered by claims Nos.:

**Remark on Protest**        ☐    The additional search fees were accompanied by the applicant's protest.

                          ☐    No protest accompanied the payment of additional search fees.

Form PCT/ISA/210 (continuation of first sheet (2)) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 01092006 A
- JP 2001330728 A

- JP H2228608 A
- JP H7294730 A